# EUROPEAN PATENT SPECIFICATION

(11) **EP 3 902 446 B1**
(45) Date of publication and mention of the grant of the patent: **10.05.2023**
(21) Application number: 19832391.7
(22) Date of filing: 20.12.2019
(51) Int. Cl.: A47G 21/18

(54) **DRINKING IMPLEMENT WITH IMPROVED BREAKING STRENGTH AND MOUTH FEEL**
TRINKGERÄT MIT VERBESSERTER BRUCHFESTIGKEIT UND VERBESSERTEM MUNDGEFÜHL
INSTRUMENT À BOIRE AYANT UNE RÉSISTANCE À LA RUPTURE AMÉLIORÉE ET PROCURANT UNE SENSATION EN BOUCHE AMÉLIORÉE

(30) Priority: 24.12.2018 WO PCT/CN2018/123157
(43) Date of publication of application: 03.11.2021
(73) Proprietor: SCHOTT AG, 55122 Mainz (DE); Schott Glass Technologies (Suzhou) Co. Ltd., Suzhou, Jiangsu 215009 (CN)
(72) Inventor: WINTERSTELLER, Fritz, 83317 Teisendorf (DE); HOPPE, Bernd, 55218 Ingelheim (DE); WEDLICH, Thomas, 95666 Mitterteich (DE); RIEDL, Markus, 95666 Mitterteich (DE); HAAS, Gottfried, 95643 Tirschenreuth (DE); QIAN, Pengxiang, Shanghai, 201201 (CN); XUE, Junming, Shanghai, 201101 (CN); STEDEN, Folker, 95615 Marktredwitz-Brand (DE); UCHIDA, Takahisa, Yokohama Kanagawa, 252--0007 (JP); DEBRECZENY, Csaba, 92637 Weiden (DE)
(74) Representative: Fuchs Patentanwälte Partnerschaft mbB
(86) International application number: PCT/EP2019/086778
(87) International publication number: WO 2020/136132

(56) References cited:
- US-A- 4 134 494
- US-A1- 2006 175 248

## Description

The present invention relates to a drinking implement.

### Background of the invention

Plastic articles harm the environment. The ban of single-use plastics is an increasing social issue. In one aspect, an increasing environmental problem is caused by plastic straws. These plastic straws are widely used, for example in restaurants, bars, cafés or at home. However, plastic straws are often found in ocean trash and can severely endanger the environment. Plastic straws have been found in the stomachs of dead seabirds and turtles. The degradation of plastic straws takes a very long time. Degradation products of plastic straws, sometimes referred to as microplastics, are taken up by microorganisms and animals and accumulate in the food chain and may cause harm to animals and humans.

Therefore, an alternative drinking implement for plastic straws is needed. The alternative should be environmentally friendly. Such a desired new type of drinking implement should be recyclable, and reusable many times in order to avoid environmentally harmful trash. Furthermore, new types of drinking implements should not end up in the stomachs of animals so as to avoid any harm to the animals and humans. Additionally, a desired drinking implement should not give rise to degradation products, which can accumulate in the food chain. The desired drinking implement should not cause harm to animals by means of internal and/or external violation.

Desirable drinking implements are environmentally friendly, resist breakage and remain dimensionally stable. Amongst others, intact and non-deformable drinking implements decrease the likelihood of being eaten by animals. At the same time, a desirable drinking implement should possess a low breakage risk, be of constant quality and have a good mouth-feel and attractive appearance

Paper drinking implements such as paper straws could be alternatives for plastic drinking implements. Paper straws have a short degradation time. However, paper straws are not suitable for multi-use. Coatings can be used to make paper straws reusable, or to color or structure the paper straws. However, these coatings reduce the recyclability and environmental friendliness of the drinking implement. Further, paper drinking implements are difficult to clean. Alternatively, straw drinking implements such as straws made of straw could be used instead of plastic straws. Straw drinking implements are biodegradable. However, straw drinking implements are not suitable for extensive multi-use. Furthermore, straw drinking implements are susceptible to deformation, and difficult to clean after use. Furthermore, other drinking implements such as wood straws or bamboo straws could be used instead of plastic straws. However, wood straws or bamboo straws by tendency have a high surface roughness and are difficult to clean. This may result in residual fluid, which can give rise to growth of microorganisms, which can harm the health of animals or humans.

Another alternative drinking implement would be metal drinking implements such as metal straws. By tendency, metal straws do not provide a good mouth-feel, attractive appearance and are difficult to provide at a constant quality. Metal straws lack transparency, so that the inside cleanliness of the metal straw cannot easily be evaluated from the outside.

Reusable drinking implements must be hygienic, i.e. they must be easy to clean for example in a usual dish-washer. They should also be chemically inert and keep this inertness even after many dishwasher cycles.

US 2006/175248 A1 relates generally to filtering devices and more specifically to drinking straws for straining out of predetermined suspended particles e.g. tea leaves, coffee, herbal infusions, solids, or the like, from fluids and preventing lips from burning during the oral absorption of fluids.

US 4 134 494 A relates to a combination straw and stirrer.

It is an object of the present invention to overcome the problems of the prior art. Particularly, it is an object of the present invention to provide a new type of drinking implement which on the one hand is environmentally friendly and on the other hand has low breakage risk and high durability.

### Description of the invention

The problem is solved by the invention in that a drinking implement being a straw having
at least one first end section comprising at least one first opening,
at least one second end section comprising at least one second opening, and
at least one wall made of glass extending from the first opening to the second opening, wherein the wall comprises the first and second end sections and surrounds at least one lumen;

wherein at least one of the first and second end sections is designed as specific end section having at least partially
   at least one ridge,
   at least one outer edge, wherein the outer edge has in each specific cross-sectional view of the specific end section at least one outer transition angle, wherein each of the specific cross-sectional views lies within a plane parallel to the center axis of the drinking implement and wherein each of the specific cross-sectional views comprises the center axis of the drinking implement, and
   at least one inner edge, wherein the inner edge has in each specific cross-sectional view at least one inner transition angle,
   wherein in each specific cross-sectional view at least one specific thickness of the wall is defined as the horizontal distance between the respective outer edge and the respective inner edge, wherein the horizontal distance is measured along an axis perpendicular to the center axis of the drinking implement;
wherein in each specific cross-sectional view the outer transition angle is the angle between on the one hand a straight line constituting the shortest connection between the respective outer edge and the respective vertex of the ridge and on the other hand a plane oriented perpendicular to the center axis of the drinking implement;
wherein in each specific cross-sectional view the inner transition angle is the angle between on the one hand a straight line constituting the shortest connection between the respective inner edge and the respective vertex of the ridge and on the other hand the plane oriented perpendicular to the center axis of the drinking implement;
wherein the outer transition angle and the inner transition angle both have absolute values of less than 90 degrees;
wherein at the inner edge the lumen has the smallest inner radius across the specific end section, is proposed.

The invention is, thus, based on the surprising finding that the usage of glass as material for drinking implements, such as straws, renders many of the drawbacks known from the state of the art obsolete. Particularly it has been observed that by using glass as material, the drinking implement is easy to clean and perfectly reusable without losing its attractive appearance, preferably even after having undergone a plurality of dishwasher cycles. It also has the benefit of being transparent so that its cleanliness can easily be evaluated from the outside. The drinking implement also has a very high recyclability without loss of quality or purity.

The industry has years of experience in glass recycling. In certain embodiments, the glass used for the drinking implements of this invention is made of a glass that is easily recyclable, e.g. a glass that is free of toxic ingredients like Pb, As, and Cd. It has a neutral taste, high chemical stability and high chemical inertness. Because of the high chemical stability of the glass wall very few substances precipitate or leak out of the glass wall, for example when the drinking implement is in contact with fluids like for example juice, tea or dishwasher fluids. Notably, the drinking implement may withstand a whole range of aggressive chemical conditions, including liquids with very acidic conditions (e.g. lime juice), alkaline conditions (e.g. some detergents), organic solvents (e.g. ethanol in vodka), and combinations thereof such as acidic and organic solvents (e.g. long island ice tea). The drinking implement should not lose its beneficial properties even under repeated influence of these harsh substances even at elevated temperatures. In preferred embodiments, the glass used for the drinking implement is able to withstand these harsh conditions. The drinking implement is suitable for cleaning with industrial washing machines without loss of quality or purity.

So far, drinking implements, such as straws, made of glass have not been widely used because users were afraid that the straw could break for example if a user bites on the end section of the drinking implement or if an end section hits the bottom of a drinking glass. Also, users have been afraid of glass straws breaking when falling to the ground, particularly when used in kitchens with hard floors such as ceramic tiles or marble. Parents have been particularly reluctant to let their children use glass straws for fear of broken glass walls and sharp shards.

The drinking implement as outlined herein solves all these issues and addresses the fears of the users, thereby helping the glass straws to penetrate the market and substitute plastic straws and less durable alternatives.

It particularly turned out that using glass as a material for the drinking implement allows to control the design of the straw, particularly the design across its end sections in an easy and efficient way. It has been surprisingly found in this respect that by controlling the edge design of the respective end sections of the drinking implement, a high mechanical resistance of the overall implement against external forces can be obtained.

The reason for that might be that external forces as mentioned above typically affect the end sections of a drinking implement. Hence, appropriate design of the end sections provides improved properties of the drinking implement.

The edge design is particularly determined by the inner and outer transition angles. Hence, it has been the astonishing finding that controlling the respective angles allows for improved mechanical properties of the straws. It turned out that in case the inner and outer transition angles are chosen such that each of these values is less than 90 degrees, a particular robust glass straw can be obtained which has a high resistance with respect to forces applied to the drinking implement. Furthermore, it has been found that at the same time also a particular pleasant mouth feel appears. This also improves safety because the risk of injuring the mouth during use due to sharp edges or the like is also reduced.

The inventors furthermore found that the inventive concept of the edge design might also be applied to glass straws afterwards. This bears the possibility that based on basic drinking implements different types of drinking implements can be manufactured, dependent on the respective intended field of use. For example one type with some design of the end section and another type with some other design of the end section. It is also possible to retrofit existing machines capable of producing drinking implements, such as glass straws, with some extension, such as a slot burner strip, to form different types of end sections.

Thanks to the proposed approach, glass straws can also be used by children with reduced risk that a glass straw breaks. A more robust drinking implement also has lots of advantages in gastronomy since glass straws which are designed according to the invention do not need to be handled with increased care but can be used in a similar way as their conventional predecessors.

Consequently, the inventive concept is based on the finding that even if glass material at a first glance might be difficult to use in kitchen environments, the advantages with respect to design capabilities render the difficulties less serious.

The person skilled in the art clearly understands that both, the outer edge as well as the inner edge, refer to the three-dimensional drinking implement. In the specific cross-sectional views the outer and inner edges typically appear as intersections points with the respective cross-sectional plane of that view. Indeed, the outer edge corresponds to a line passing along the outer circumference of the drinking implement at its outer side. Accordingly, the inner edge corresponds to a line passing along the inner circumference of the drinking implement at its inner side. When the respective circumferential lines intersect the respective cross-sectional plane, then in the cross-sectional views the two lines appears as intersection points.

It is acknowledged that the term "specific cross-sectional view" refers to the cross-sectional view which is obtained if a plane, which is parallel to the center axis of the drinking implement and which comprises the center axis of the drinking implement, crosses the drinking implement. Of course, there exists a plurality (if not an infinite number) of specific cross-sectional views which comply with this definition.

If in this application the term "cross-sectional view" is used, it preferably refers to a "specific cross-sectional view" if nothing to the contrary is mentioned explicitly or if nothing else arises from the context.

In preferred embodiments the value of the outer transition angle, the inner transition angle and/or the specific thickness, respectively, do not change across the specific cross-sectional views. This might be the case for a highly symmetric drinking implement. However, in also preferred embodiments the value of the outer transition angle, the inner transition angle and/or the specific thickness, respectively, do change across at least some of the specific cross-sectional views.

In one embodiment it might alternatively or in addition be preferred that, preferably in at least one particular or each specific cross-sectional view, the absolute value of the outer transition angle is not the same as the absolute value of the inner transition angle.

If the outer and inner transition angles have different absolute values, more complex design options can be obtained which in turn allows to more carefully adjust the design of the edges to actual requirements. For example the independent choice of the two angles, i.e. the inner and outer transition angles, may be used to obtain a particularly high resistance with respect to dropping the drinking implement into a drinking glass. It may alternatively or in addition be used to obtain a particular pleasant mouth feel. It may alternatively or in addition be used to obtain a particular safe design with respect to harms to the mouth of the user who uses the drinking implement.

In one embodiment it might alternatively or in addition be preferred that, preferably in the at least one particular or each specific cross-sectional view, the outer transition angle has an absolute value of from >0 degrees to <90 degrees, from 20 degrees to 60 degrees, from 30 degrees to 50 degrees, at least 10 degrees, at least 20 degrees, at least 30 degrees, less than 90 degrees, less than or equal to 80 degrees, less than or equal to 70 degrees, less than or equal to 60 degrees or less than or equal to 50 degrees.

By limiting the outer transition angle to said upper and/or lower boundaries, a particularly robust and at the same time particularly pleasant drinking implement with respect to mouth feel might be obtained.

A smaller outer transition angle of the outer edge might provide a better mouth-feel, for example for the lips and the tongue during drinking. Furthermore, a smaller outer transition angle of the outer edge, might prevent harm by means of internal and/or external violation.

For example, in preferred embodiments the outer transition angle might be limited to an absolute value between 10 and 70 degrees, between 30 and 70 degrees, between 40 and 70 degrees, between 10 and 50 degrees, between 30 and 50 degrees or between 40 and 50 degrees.

In one preferred embodiment the outer transition angle is limited to the boundaries in each specific cross-sectional view. Preferably there still is a variation across at least some of the specific cross-sectional views with respect to the outer transition angle.

In one embodiment it might alternatively or in addition be preferred that, preferably in the at least one particular or each specific cross-sectional view, the inner transition angle has an absolute value of from >0 degrees to <90 degrees, from 20 degrees to 60 degrees, from 30 degrees to 50 degrees, at least 10 degrees, at least 20 degrees, at least 30 degrees, less than 90 degrees, less than or equal to 80 degrees, less than or equal to 70 degrees, less than or equal to 60 degrees or less than or equal to 50 degrees.

By limiting the inner transition angle to said upper and/or lower boundaries, a particularly robust and at the same time particularly pleasant drinking implement with respect to mouth feel might be obtained.

In preferred embodiments, the inner transition angle is larger than the outer transition angle. A smaller inner transition angle might provide a better taste and a better mouth-feel for example for the tongue during drinking. Furthermore, a smaller inner transition angle prevents harm by means of internal and/or external violation. A smaller inner transition angle can prevent harm to the inside of the mouth as for example the tongue.

In preferred embodiments, the first and second transition angles both have the same absolute value (hence, uniform edges). Preferably, the ratio of the outer transition angle and the inner transition angle is from 0.75 to 1.25, or from 0.8 to 1.2, or even from 0.9 to 1.1. In preferred embodiments, the ratio of the outer transition angle and the inner transition angle is from 0.99 to 1.01. Uniform edges provide a preferred mouth feel.

For example, in preferred embodiments the inner transition angle might be limited to an absolute value between 10 and 50 degrees, between 10 and 40 degrees, between 10 and 30 degrees, between 20 and 50 degrees, between 20 and 40 degrees, between 30 and 50 degrees, between 30 and 40 or between 40 and 50 degrees.

In one preferred embodiment the inner transition angle is limited to the boundaries in each specific cross-sectional view. Preferably there still is a variation across at least some of the specific cross-sectional views with respect to the inner transition angle.

In one embodiment it might alternatively or in addition be preferred that, preferably in the at least one particular or each specific cross-sectional view, the outer transition angle has a value of between 40 and 50 degrees and/or the inner transition angle has a value of between 15 and 45 degrees.

It has been found that choosing respective outer and/or inner transition angles yield a particularly pleasant mouth feel during use of the drinking implement and/or a particular mechanical robustness of the drinking implement.

In one embodiment it might alternatively or in addition be preferred that, preferably in the at least one particular or each specific cross-sectional view, at the outer edge the drinking implement has the largest outer radius across the specific end section.

If the design of the end section is chosen accordingly, an improved control of the design of the specific end section, hence, of the mechanical robustness and/or the mouth feel provided by that end section, can be obtained.

In the at least one particular or each specific cross-sectional view at the inner edge the lumen has the smallest inner radius across the specific end section.

If the design of the end section is chosen accordingly, an improved control of the design of the specific end section, hence, of the mechanical robustness and/or the mouth feel provided by that end section, can be obtained.

In one embodiment it might alternatively or in addition be preferred that, preferably in the at least one particular or each specific cross-sectional view, a first distance is defined by the vertical distance between the vertex of the ridge and the outer edge, which is larger than a second distance defined by the vertical distance between the vertex of the ridge and the inner edge, wherein preferably the vertical distances are measured along a direction parallel to the center axis of the drinking implement.

It has been the astonishing finding that a design of the end sections which follows the stated relative relations between the first and second distance allows a more robust design. The inventors assume that this is achieved in that upon fulfilling the relation the end section at least in part is typically tilted towards the center axis of the drinking implement. This might yield a larger top surface area, which in turn, according to the assumption of the inventors, might offer a higher resistance against shocks and the like - for example if the drinking implement is dropped into a drinking glass or even if the drinking implement falls towards the floor.

In one embodiment it might alternatively or in addition be preferred that, preferably in the at least one particular or each specific cross-sectional view, the ratio between the first distance and the second distance is between 1.10 and 2.10.

A ratio fulfilling this criterion is preferred since it has been found that the robustness of such drinking implements is particularly improved while at the same time the mouth feel is pleasant, hence also the danger of injury is reduced.

In preferred embodiments the ratio is between 1.3 and 1.8, more preferably between 1.4 and 1.7.

For example, a preferred ratio might be about 2:1, i.e. the first distance is two times as long as the second distance. This has been proven to yield a particular beneficial design of the drinking implement, especially its end section(s), preferably the specific end section. Also preferred might be a ratio of 3:2, i.e. the first distance is 50 % longer than the second distance.

In one embodiment it might alternatively or in addition be preferred that, preferably in the at least one particular or each specific cross-sectional view, a third distance is defined by the horizontal distance between the vertex of the ridge and the outer edge, which is larger than a fourth distance defined by the horizontal distance between the vertex of the ridge and the inner edge, wherein preferably the horizontal distances are measured along an axis, preferably within the respective cross-sectional view, which axis is perpendicular to the center axis of the drinking implement.

It has been the astonish finding that a design of the end sections which follows the stated relative relations between the third and fourth distance allows a more robust design. The inventors assume that this is achieved in that upon fulfilling the relation the end section at least in part is typically tilted towards the center axis of the drinking implement. This might yield a larger top surface area, which in turn, according to the assumption of the inventors, might offer a higher resistance against shocks and the like - for example if the dirking implement is dropped into a drinking glass or even if the drinking implement falls towards the floor.

It is noted that drinking implements fulfilling a respective ratio of first and second distances as well as a ratio of third and fourth distances might be particularly preferred.

In one embodiment it might alternatively or in addition be preferred that, preferably in the at least one particular or each specific cross-sectional view, the ratio of the fourth distance and the third distance is less than 2.0, preferably less than 0.8.

A ratio fulfilling this criterion is preferred since it has been found that the robustness of such drinking implements is particularly improved while at the same time the mouth feel is pleasant, hence also the danger of injury is reduced.

In preferred embodiments the ratio is smaller than 1.6, more preferably smaller than 1.2, even more preferred smaller than 0.5.

For example a preferred ratio might be about 1:2, i.e. the third distance is two times as long as the fourth distance. This has been proven to yield a particular beneficial design of the drinking implement, especially its end section(s), preferably the specific end section.

In one embodiment it might alternatively or in addition be preferred that, preferably in the at least one particular or each specific cross-sectional view, the ratio of on the one hand the specific thickness and on the other hand the minimal thickness of the wall of the drinking implement is larger than 1.10.

Having a respective ratio of the thicknesses the end section(s) of the drinking implement is particular robust. It has been proven sufficient that in preferred embodiments the specific thickness is for example just 10 % larger than the minimal thickness of the wall.

If in addition also the ratio of the first and second distance and/or the ratio of the third and fourth distances is considered as set forth by the invention as preferred embodiments, a particular well-balanced drinking implement, especially with well-balanced end-section(s), preferably specific end section, is obtained.

In preferred embodiments, alternatively or in addition, the end section(s), preferably the specific end section, is designed as a flattened sphere, preferably in each specific cross-sectional view.

Preferably the flattened sphere is tilted towards the center, preferably in each specific cross-sectional view. Such a flattened and/or tilted sphere might be obtained by fulfilling the criterions concerning the two ratios and/or the specific thickness as described.

In one embodiment it might alternatively or in addition be preferred that the drinking implement has a score of at least 10, preferably of at least 50, more preferably of at least 100, in the 50 mm barkeeper drop test.

It is the surprising finding that the 50 mm barkeeper drop test provides an illustrative, reproducible and - which is most important - reliable measure for the robustness of the drinking implement.

The barkeeper drop test is particularly useful because it represent a common usage of a drinking implement according to the invention. Thus, making a common scenario subject to a test provides a beneficial basis for evaluating and characterizing the properties of the drinking implement.

If the drinking implement has a score of 10 or more in the 50 mm barkeeper drop test an improved robustness of the drinking implement is provided. If an even more increased score is assigned to a drinking implement, the drinking implement can be handled under even more rough conditions without high concerns that the drinking implement breaks or that an unpleasant mouth feel occurs.

In one embodiment it might alternatively or in addition be preferred that wherein for the 50 mm barkeeper drop test the drinking implement is dropped into a container made of glass, arranged directly on at least one solid support, from a dropping distance of 50 mm, wherein the dropping distance is defined by the vertical distance measured along the center axis of the container between the inner bottom of the container and the end of the drinking implement next to the container, being the end of the specific end section; wherein the container is a drinking glass of at least in part cylindrical shape, which has an inner extension along the center axis of 15 cm from its top to its inner bottom and an inner diameter of 5 cm and which is further filled with water from the inner bottom along the center axis up to a height of 10 cm; wherein when dropping the drinking implement, it is oriented such that its center axis and the center axis of the container enclose an angle of 5 degrees; wherein the center axis of the container is parallel to the effect of the earth's gravitational force; and wherein the score the drinking implement has in the 50 mm barkeeper drop test corresponds to the number of consecutive times which the drinking implement can be made subject to the 50 mm barkeeper drop test until failure of the drinking implement, wherein failure means that in at least one of the specific cross-sectional views the specific thickness is reduced, especially is reduced by at least 5 %, compared to the respective specific thickness prior to conducting the 50 mm barkeeper drop test.

If the 50 mm barkeeper drop test is carried out as set forth in the preferred embodiment, the reproducibility is improved. Furthermore, it is the finding that the setup described is very close to a real-world scenario. Hence, evaluation and characterizing of the properties of a drinking implement can be accomplished with high accuracy, and in an efficient way with conventional means such as a drinking glass.

If the drinking implement is dropped into a drinking glass, a container is used in line with the usual conditions in a restaurant or a bar. Also the preferred inner diameter of 5 cm and the preferred inner extension of 15 cm, respectively, of the drinking glass are in line with usual drinking glasses. It is acknowledged that "inner extension" preferably means the inner height of the drinking glass. In other words, if the drinking glass is fully filled with a fluid, such as water, the height of the water is preferably 15 cm (preferably neglecting surface tension or similar effects of the fluid). Preferably, the inner bottom of the drinking glass is flat.

If the dropping distance is 50 mm, the distance is chosen according to the usual conditions in a restaurant or a bar when a drink is prepared and a drinking implement is dropped into the drinking glass by the bartender. If the drinking glass is filled with 10 cm of water, the drinking implement is immersed into the water by a vertical distance (i.e. a distance along the center axis of the drinking glass) of 5 cm. If the drinking implement's center axis encloses an angle of 5 degrees with the center axis of the drinking glass, a typical situation of the preparation process of a drink is reproduced. Of course, for an angle different than zero degrees, the part of the drinking implement immersed into water under the preferred conditions might have a length different from the 5 cm mentioned above, especially a length which is larger than 5 cm.

The solid support can preferably be made of any appropriate material. However, preferred materials are wood, such as oak or beech, or metal, such as stainless steel. This is, because wood and metal, preferably stainless steel, are often used in restaurants and bars in the area where drinks are prepared. This allows to reproduce the real scenario in a best manner.

With respect to the definition of failure it is acknowledged that once a part of at least one end section of the drinking implement, especially the specific end section, is broken, of course, the specific thickness might not be defined any longer in each specific cross-sectional view according to the original definition due to lack of the outer and/or inner edge. In other words, the former outer and/or inner edge of the drinking implement might not be present any longer in all and/or at least some of the specific cross-sectional views if it has chipped or the like.

Therefore, after the 50 mm barkeeper drop test has been carried out and for the purpose of determining if a failure occurs in any of the specific cross-sectional views, the following definition is preferably applied:
The specific thickness in a specific cross-sectional view after conducting the 50 mm barkeeper drop test is determined the same way as the specific thickness in the specific cross-sectional view before conducting the 50 mm barkeeper drop test, wherein the intersection points of a straight line with the outer and inner surface of the drinking implement as they are present after conducting the 50 mm barkeeper drop test are deemed to be, respectively, the outer and the inner edge for determining the specific thickness, wherein the intersection point which is closer to the center axis of the drinking implement corresponds to the inner edge, wherein the straight line is defined in the specific cross-sectional view by the shortest connection line between the outer and inner edge as present before conducting the 50 mm barkeeper drop test.

Of course, for each specific cross-sectional view a different scenario can be present. I.e. for each specific cross-sectional view either only the outer edge is missing or only the inner edge is missing or the outer and inner edges are missing or the outer and inner edges are present.

In one embodiment it might alternatively or in addition be preferred that the drinking implement is at least in part, preferably at least in part at the first and/or second end section, especially at least in part at the specific end section, at least one of the following: chemically toughened, physically toughened, annealed and autoclaved; and/or wherein the drinking implement is manufactured at least in part by at least one of the following: using a laser cutting technique, using a scratching technique and using a sawing technique.

It has been found that choosing an appropriate cutting technique might improve the mechanical properties of the drinking implement.

In preferred embodiments the drinking implement is cut using a laser cut technique. In also preferred embodiments the drinking implement is cut using a scratch technique.

Toughening such as chemical toughening might further improve the mechanical properties of the drinking implement in preferred embodiments.

In one embodiment it might alternatively or in addition be preferred that the drinking implement comprises silicate glass such as alumosilicate glass and/or borosilicate glass.

Using respective types of glass might be preferred for achieving a robust and pleasant drinking implement.

In one embodiment it might alternatively or in addition be preferred that the first end section and the second end section both are designed as specific end section.

If both end sections are designed as specific end sections, an improved drinking implement might be obtained since the beneficial properties take effect for both ends of the drinking implement.

In one embodiment it might alternatively or in addition be preferred that only one of the first and second end sections, preferably the first end section, is designed as specific end section and the other end section, preferably the second end section, is not designed as specific end section.

If only one end section is designed as specific end section a preferred orientation of the drinking implement might be given. Furthermore, production costs can be reduced if only one end section is designed as specific end section.

In one embodiment it might alternatively or in addition be preferred that a fluid can be drawn through the first opening, into the lumen and out of the second opening by applying suction to the second opening.

Designing the drinking implement such that a user can consume a fluid, such as a cocktail or the like, by means of the drinking implement, the drinking implement can be used for a highly appreciated usage.

Preferably all of the fluid which is drawn through the first opening is also drawn out of the second opening. In other words, preferably the drinking implement has only two openings.

In one embodiment it might alternatively or in addition be preferred that the wall has an inner surface facing towards the lumen and/or an outer surface facing away from the lumen.

In one embodiment it might alternatively or in addition be preferred that the first end section extends between 0.1 and 10 mm, preferably between 0.3 and 7 mm, more preferably between 0.5 and 5 mm, most preferably between 0.7 and 4 mm along the center axis of the drinking implement.

For example in preferred embodiments the first end section might have an extension of 10 mm or less, 9 mm or less, 8 mm or less, 7 mm or less, 6 mm or less, 5 mm or less, 4 mm or less, 3 mm or less, 2 mm or less or 1 mm or less. This allows to have a definite length of the first end section.

In one embodiment it might alternatively or in addition be preferred that the second end section extends between 0.1 and 10 mm, preferably between 0.3 and 7 mm, more preferably between 0.5 and 5 mm, most preferably between 0.7 and 4 mm along the center axis of the drinking implement.

For example in preferred embodiments the second end section might have an extension of 10 mm or less, 9 mm or less, 8 mm or less, 7 mm or less, 6 mm or less, 5 mm or less, 4 mm or less, 3 mm or less, 2 mm or less or 1 mm or less. This allows to have a definite length of the second end section.

### Different Aspects

In the following different aspects are described in further detail which might be beneficial for the invention alone or in combination with any other features.

### Arrangements

In an embodiment and/or during use of the drinking implement, the first opening can be the lower opening, and the second opening can be the upper opening of the drinking implement. The lower opening may be the opening that extends into the fluid to be ingested through the drinking implement, whereas the upper opening may be the opening contacting the lips of the user during use of the drinking implement. In this case, preferably the first and second end sections both are designed as specific end sections.

In one exemplary embodiment, the drinking implement essentially comprises the wall, the openings and the lumen. In other exemplary embodiments, the drinking implement has further parts, such as a receptacle for holding flowers or cocktail umbrellas. In just another embodiment the drinking implement may preferably be of straight shape, or curved.

The inventors have conducted comprehensive experiments to find out how the drinking implement can be improved to achieve the objectives of this invention.

### Geometric parameters

The outer diameter perpendicular to the center axis of the wall of the drinking implement preferably is at most 25 mm, at most 20 mm, at most 15 mm, at most 9.5 mm, at most 8.5 mm, or at most 7.5. In some embodiments, the outer diameter perpendicular to the center axis of the drinking implement is at most 7 mm. A smaller outer diameter reduces the amount of glass for the manufacture of the drinking implement and the amount of trash, when the drinking implement is disposed of. Therefore, drinking implements with a smaller outer diameter are more environmentally friendly. Furthermore, a smaller outer diameter reduces the weight of the drinking implement. A drinking implement with a lower weight is more easy to use during drinking. It is one of the advantages of this invention that the drinking implement have excellent breakage and durability characteristics at relatively low weight/wall thickness.

The outer diameter perpendicular to the center axis of the wall of the drinking implement preferably is at least 2 mm, at least 3 mm, at least 4 mm, at least 6 mm. In some embodiments, the outer diameter perpendicular to the center axis of the drinking implement is at least 7 mm. A too small diameter impedes the suction of fluid through the lumen of the drinking implement. Additionally, a too small diameter makes it more difficult for the mouth to easily adapt and rightly enclose the drinking implement. Furthermore, a too small diameter renders the drinking implement more susceptible to breakage or at least leaves the impression that it might break easily. The term "outer diameter" may refer to the largest or the average diameter measured perpendicular to the center axis of the wall of the drinking implement between the outer surface on the one side of the wall, and the outer surface on the other side of the wall.

The wall of the drinking implement preferably has a thickness of at most 5 mm, at most 4 mm, at most 3 mm, at most 2 mm, at most 1.6 mm, at most 1.5 mm. In some embodiments, the wall of the drinking implement is less than 1.4 mm. In some embodiments, the wall is at most 6 mm. if the wall of the drinking implement is too thick the implement will be heavy and unpleasant to use. Also, a thick drinking implement gives an unpleasant mouth feel.

The wall of the drinking implement preferably has a thickness of at least 0.1 mm, at least 0.2 mm, at least 0.3 mm, at least 0.5 mm. In some embodiments, the wall of the drinking implement is at least 0.6 mm, at least 0.8 mm, at least 1.0 mm. In some embodiments, the wall is at least 3 mm. The term thickness may refer to the largest thickness or the average thickness of the wall, if the thickness is not the same in all areas.

Preferably, the length of the drinking implement is at least 10 mm, at least 50 mm, at least 100 mm, or at least 200 mm. Preferably, the length of the drinking implement is at most 800 mm, at most 500 mm, at most 400 mm, or at most 300 mm.

In an embodiment, the drinking implement has a length from 50 mm to 800 mm. The length may be at least 90 mm, at least 100 mm, at least 120 mm, or at least 180 mm. In embodiments, the length is limited to at most 600 mm, at most 400 mm, at most 300 mm or at most 250 mm. These lengths of the drinking implement have been proven useful for most desired applications.

The wall of the drinking implement preferably has less than two flaws with a diameter of more than 10 µm per cm² of glass. Flaw means a mark, bubble, airline, scratch, crack, tear, rupture, clouding, discoloration, stain, blemish, inclusions or other imperfections or defects in the glass. The flaw diameter is measured by light microscopy. It may refer to Martin's diameter. In an embodiment, the number of flaws is evaluated based on microscopic analysis of at least 10 cm² of glass.

The drinking implement has a cross section perpendicular to the center axis of the drinking implement. The cross-section may have a regular or an irregular shape. The cross section perpendicular to the center axis of the drinking implement may be circular. A circular cross section is more easily adapted and tightly enclosed by the mouth. Thereby a better mouth-feel is achieved. Further, circular cross sections allow for easy cleaning and unimpeded fluid flow through the lumen.

In preferred embodiments the cross-section is circular. In particularly preferred embodiments the cross section perpendicular to the center axis of the drinking implement is circular.

### Further glass properties

The coefficient of linear thermal expansion (CTE) is a measure of characterizing the expansion behavior of a glass when it experiences certain temperature variation. CTE may be the average linear thermal expansion coefficient in a temperature range of from 20°C to 300°C as defined in DIN ISO 7991:1987. The lower the CTE, the less expansion with temperature variation. Therefore, in the temperature range of from 20°C to 300°C the glass of the wall of the drinking implement of the present invention preferably has a CTE of less than 12 ppm/K, more preferably less than 10.0 ppm/K, more preferably less than 9.0 ppm/K, more preferably less than 8.0 ppm/K, more preferably less than 7 ppm/K, more preferably less than 6.5 ppm/K. However, the CTE should also not be very low. Preferably, in the temperature range of from 20°C to 300°C the CTE of the glasses of the present invention is more than 3 ppm/K, more preferably more than 4 ppm/K, more preferably more than 5 ppm/K, more preferably more than 6 ppm/K. In order for the glasses to be well suitable for chemical toughening, the glasses may contain relatively high amounts of alkali metal ions, preferably sodium ions. However, thereby the average linear thermal expansion coefficient CTE in the temperature range between 20°C and 300°C is increased. Preferably, the glass of the wall of the drinking implement of the invention has a CTE higher than 7*10⁻⁶/°C, more preferably higher than 8*10⁻⁶/°C, more preferably higher than 9*10⁻⁶/°C. However, a high CTE also complicates production of the glasses by direct hot-forming. Therefore, the glasses preferably have a CTE lower than 13*10⁻⁶/°C.

The transition temperature of the glass used for the wall of the drinking implement may be higher than 300 °C, higher than 500 °C, higher than 520 °C, higher than 530 °C, higher than 550 °C, or even higher than 600 °C. The transition temperature of the wall of the drinking implement may be lower than 900 °C, lower than 800 °C, lower than 700 °C, lower than 650 °C, or lower than 630 °C. Generally, a low transition temperature usually includes lower energy costs for melting the glass and for processing. Also, the glass will usually have a lower fictive temperature if the transition temperature is low. Hence, the glass will be less prone to irreversible thermal shrinkage during optional chemical toughening, if the transition temperature is higher.

The drinking implement should be manufactured with a high purity and it should feature a good resistance, especially against alkaline solutions. The resistance against alkaline solutions is important for the use of drinking implements. Alkaline solutions are often used as cleaning agents for drinking implements. Preferably, the drinking implement has an alkaline resistance according to DIN ISO 695:1994 of class A3, of A2, or even of A1. Alkaline resistance means resistance to attack by aqueous alkaline solutions at 50 °C. High chemical stability and/or a high alkaline resistance will lead to strongly reduced precipitation or leakage of substances out of the drinking implement for example when the drinking implement is in contact with fluids such as juice, tea or dishwasher water. Leakage of substances out of the drinking implement will change the chemical composition of the surface of the glass from which substances have leaked. This might lead negative effects on the appearance and should therefore be avoided.

The average surface roughness (Rₐ) is a measure of the texture of a surface. It is quantified by the vertical deviations of a real surface from its ideal form. Commonly amplitude parameters characterize the surface based on the vertical deviations of the roughness profile from the mean line. Rₐ is arithmetic average of the absolute values of these vertical deviations. The roughness can be measured with atomic force microscopy. The inner surface and/or outer surface of the drinking implement preferably has an average surface roughness Ra of less than 30 nm, of less than 10 nm, of less than 5 nm, of less than 2 nm, of less than 1 nm. In some embodiments, the surface roughness Ra is less than 0.5 nm. A smaller inner and/or outer surface roughness reduces the amount residual fluid. Residual fluid within the drinking implement can give rise to growth of microorganisms which could harm the health of animals or humans. Furthermore, a smaller outer surface roughness gives a better mouth-feel and tongue-feel as well as gives a more pleasant feeling when holding the drinking element in the hand. The mentioned roughness values can be obtained by fire-polishing the glass.

### Glass compositions

The glass used for the wall of the drinking implement is not limited to a specific glass composition. The glass may be selected from the group consisting of soda-lime glass, borosilicate glass, alkaline-resistant glass and aluminosilicate glass. Optionally, a borosilicate glass is used.

The glass of the drinking implement preferably comprises the following components in the indicated amounts (in wt.%):

| **Component** | **Content (wt.%)** |
|---|---|
| SiO₂ | 40 to 85 |
| Al₂O₃ | 0 to 25 |
| Na₂O | 0 to 18 |
| K₂O | 0 to 15 |
| MgO | 0 to 10 |
| B₂O₃ | 0 to 22 |
| Li₂O | 0 to 10 |
| ZnO | 0 to 5 |
| CaO | 0 to 16 |
| BaO | 0 to 12 |
| ZrO₂ | 0 to 5 |
| CeO₂ | 0 to 0.5 |
| SnO₂ | 0 to 3 |
| P₂O₅ | 0 to 15 |
| Fe₂O₃ | 0 to 1.5 |
| TiO₂ | 0 to 10 |
| SrO | 0 to 1 |
| F | 0 to 1 |
| Cl | 0 to 1 |

SiO₂ is a relevant network former that can be used in the glass used for this of the invention. Therefore, the glasses may comprise SiO₂ in an amount of at least 60 wt.%. More preferably, the glass comprises SiO₂ in an amount of at least 62 wt.%, at least 65 wt.%, at least 68 wt.%, more than 70 wt.%, or even more than 75 wt.%. However, the content of SiO₂ in the glass should also not be extremely high because otherwise the meltability may be compromised. The amount of SiO₂ in the glass may be limited to at most 85 wt.%, or at most 82 wt.%. In embodiments, the content of SiO₂ in the glass is from 60 to 85 wt.%, or from >65 to 75 wt.%.

B₂O₃ may be used in order to enhance the network by increasing the bridge-oxide in the glass via the form of [BO₄] tetrahedra. It also helps to improve the damage resistance of the glass. However, B₂O₃ should not be used in high amounts in the glass since it can decrease the ion-exchange performance. Furthermore, addition of B₂O₃ can significantly reduce the Young's modulus. The glass may comprise B₂O₃ in an amount of from 0 to 20 wt.%, preferably from 0 to 15 wt.%, preferably from 0.1 to 13 wt.%. In embodiments, the glass preferably comprises at least 5 wt.%, more preferably at least 7 wt.%, or at least 10 wt.% of B₂O₃.

P₂O₅ may be used in the glass of the invention in order to help lowering the melting viscosity by forming [PO₄] tetrahedra, which can significantly lower the melting point without sacrificing anti-crystallization features. Limited amounts of P₂O₅ do not increase geometry variation very much, but can significantly improve the glass melting, forming performance, and ion-exchanging (chemical toughening) performance. However, if high amounts of P₂O₅ are used, geometry expansion upon chemical toughening may be increased significantly. Therefore, the glasses may comprise P₂O₅ in an amount of from 0 to 4 wt.%, or from 0 to 2 wt.%. In some embodiments, the glass is free of P₂O₅.

It is believed that Al₂O₃ can easily form tetrahedra coordination when the alkaline oxide ratio content is equal or higher than that of Al₂O₃. [AlO₄] tetrahedra coordination can help building up more compact network together with [SiO₄] tetrahedra, which can result in a low geometry variation of the glass. [AlO₄] tetrahedra can also dramatically enhance the ion-exchange process during chemical toughening. Therefore, Al₂O₃ is preferably contained in the glasses in an amount of at least 0 wt.%, more preferably of more than 1 wt.%, more preferably of more than 4 wt.%. However, the amount of Al₂O₃ should also not be very high because otherwise the viscosity may be very high so that the meltability may be impaired. Therefore, the content of Al₂O₃ in the glasses is preferably at most 20 wt.%, at most 12 wt.%, or at most 10 wt.%. In preferred embodiments, the content of Al₂O₃ in the glasses is from 0 to 20 wt.%, from 1 to 12 wt.%, from 4 to 10 wt.%.

TiO₂ can also form [TiO₄] and can thus help building up the network of the glass, and may also be beneficial for improving the acid resistance of the glass. However, the amount of TiO₂ in the glass should not be very high. TiO₂ present in high concentrations may function as a nucleating agent and may thus result in crystallization during manufacturing. Preferably, the content of TiO₂ in the glasses is from 0 to 10 wt.%, or up to 7 wt.%. In some embodiments, the glass comprises at least 0.5 wt.%, at least 2 wt.%, or at least 3 wt.% of TiO₂. In an embodiment, the glass is free of TiO₂.

ZrO₂ has the functions of lowering the CTE and improving the alkaline resistance of a glass. It may increase the melting viscosity, which can be suppressed by using P₂O₅. Like alkaline metals, Zr⁴⁺ is also a network modifier. Furthermore, ZrO₂ is a significant contributor for increased Young's modulus. Preferably, the content of ZrO₂ in the glasses is from 0 to 5 wt.%, up to 2 wt.%. The glass may be free of ZrO₂. In some embodiments, the glass comprises at least 0.1 wt.%, or at least 0.2 wt.% ZrO₂.

Alkaline oxides R₂O (Li₂O + Na₂O + K₂O + Cs₂O) may be used as network modifiers to supply sufficient oxygen anions to form the glass network. Preferably, the content of R₂O in the glasses is more than 4 wt.%, or more than 12 wt.%. However, the content of R₂O in the glass should not be very high because otherwise chemical stability and chemical toughenability may be impaired.

Preferably, the glasses comprise R₂O in an amount of at most 30 wt.%, at most 25 wt.%, or at most 20 wt.%. Other embodiments are free of alkaline oxides, or at least free of Na₂O, K₂O, Cs₂O and/or Li₂O

Li₂O can help improving the Young's modulus and lowering CTE of the glass. Li₂O also influences the ion-exchange greatly. It was surprisingly found that Li-containing glass has a smaller geometry variation. Therefore, the content of Li₂O in the glasses may be set to at least 0 wt.%, or more than 5 wt.%, or even more than 10 wt.%. However, the content of Li₂O should not be very high because otherwise chemical stability and chemical toughenability may be impaired. Preferably, the content of Li₂O in the glasses is at most 24 wt.%, less than 15 wt.%, or even 0 wt.%.

Na₂O may be used as a network modifier. However, the content of Na₂O should not be very high because otherwise chemical stability and chemical toughenability may be impaired. Preferably, the content of Na₂O in the glasses is from 0 to 15 wt.%, preferably from 2 to 15 wt.%. In preferred embodiments, the content of Na₂O in the glasses is at least 5 wt.%, at least 8 wt.%, or at least 10 wt.%.

K₂O may be used as a network modifier. However, the content of K₂O should not be very high because otherwise chemical stability and chemical toughenability may be impaired. Preferably, the content of K₂O in the glasses is from 0 to 15 wt.%, or from >0.5 to 7 wt.%. The glass may be free of K₂O.

Preferably, the glasses comprise more Na₂O than K₂O. Thus, preferably the molar ratio Na₂O/( Na₂O+K₂O) is from >0.5 to 1.0, from >0.6 to 1.0, from >0.7 to 1.0, or from >0.8 to 1.0.

Preferably, the content of the sum of Li₂O and Na₂O in the glasses is more than 10 mol-%, or more than 15 mol-%. However, the content of the sum of Li₂O and Na₂O in the glasses should not be very high. Preferably, the content of the sum of Li₂O and Na₂O in the glasses is at most 25 mol-%, or at most 20 mol-%.

The glasses may also comprise alkaline earth metal oxides as well as ZnO which are collectively termed "RO" in the present specification. Alkaline earth metals and Zn may serve as network modifiers. Preferably, the glasses comprise RO in an amount of from 0 to 20 wt.%, preferably from 0 to 15 wt.%. In some embodiments, the glass preferably comprises at least 0.5 wt.%, more preferably at least 1 wt.%, more preferably at least 5 wt.% of RO. Preferred alkaline earth metal oxides are selected from the group consisting of MgO, CaO, SrO und BaO. More preferably, alkaline earth metals are selected from the group consisting of MgO und CaO. More preferably, the alkaline earth metal is MgO. Preferably, the glass comprises MgO in an amount of from 0 to 10 wt.%. In some embodiments, the glass comprises at least 0.5 wt.%, at least 1 wt.%, or at least 2 wt.% of MgO. Preferably, the glass comprises CaO in an amount of from 0 to 16 wt.%, preferably from 0 to 13 wt.%, preferably from 0 to 10 wt.%. In some embodiments, the glass comprises at least 0.5 wt.%, at least 1 wt.%, at least 5 wt.%, at least 10 wt.%, or at least 12 wt.% of CaO. Preferably, the glass comprises BaO in an amount of from 0 to 12 wt.%, preferably from 0 to 10 wt.%. In some embodiments, the glass comprises at least 0.5 wt.%, at least 2 wt.%, or at least 7 wt.% of BaO. The glass may be free of BaO, MgO and/or CaO.

Preferably, the glass comprises ZnO in an amount of from 0 to 5 wt.%. In some embodiments, the glass comprises at least 0.5 wt.%, at least 1 wt.%, or at least 2 wt.% of ZnO. In other embodiments, the glass is free of ZnO. Preferably, the content of the sum of MgO and ZnO in the glasses is from 0 to 10 wt.%. In some embodiments, the content of the sum of MgO and ZnO in the glasses at least 0.5 wt.%, more preferably at least 1 wt.%, more preferably at least 2 wt.%.

At the end, when forming a glass by mixing different types of the oxides, the integrated effect should be considered to achieve a glass with comparatively low expansion, which is supported by high densification of the glass network. It means, in addition to [SiO₄] tetrahedral [BO₄] tetrahedra, [AlO₄] tetrahedra, or [PO₄] tetrahedra are expected to help connect the [SiO₄] more effectively rather than other type of polyhedrons. In other words, [BO₃] triangle and [AlO₆] octahedron, for instance, are not preferred. It means, sufficient oxygen anions are preferable to be offered by adding proper amounts of metal oxides, such as R₂O and RO.

Preferably, the content of SnO₂ in the glasses is from 0 to 3 wt.%. More preferably, the glasses are free of SnO₂. Preferably, the content of Sb₂O₃ in the glasses is from 0 to 3 wt.%. More preferably, the glasses are free of Sb₂O₃. Preferably, the content of CeO₂ in the glasses is from 0 to 3 wt.%. High contents of CeO₂ are disadvantages because CeO₂ has a coloring effect. Therefore, more preferably, the glasses are free of CeO₂. Preferably, the content of Fe₂O₃ in the glasses is from 0 to 3 wt.%. More preferably, the glasses are free of Fe₂O₃.

The glass described herein is described as having a composition of different constituents. This means that the glass contains these constituents without excluding further constituents that are not mentioned. However, in preferred embodiments, the glass consists of the components mentioned in the present specification to an extent of at least 95%, more preferably at least 97%, most preferably at least 99%. In most preferred embodiments, the glass essentially consists of the components mentioned in the present specification.

Optionally, coloring oxides can be added, such as Nd₂O₃, Fe₂O₃, CoO, NiO, V₂O₅, MnO₂, CuO, CeO₂, Cr₂O₃.

0-2 wt.% of As₂O₃, Sb₂O₃, SnO₂, SO₃, Cl and/or F could be also added as refining agents. 0-5 wt.% of rare earth oxides could also be added to add optical or other functions to the glass wall.

The terms "*X-free*" and "*free of component X*", or "0 % of X", respectively, as used herein, refer to a glass, which essentially does not comprise said component X, i.e. such component may be present in the glass at most as an impurity or contamination, however, is not added to the glass composition as an individual component. This means that the component X is not added in essential amounts. Non-essential amounts according to the present invention are amounts of less than 100 ppm, preferably less than 50 ppm and more preferably less than 10 ppm. Preferably, the glasses described herein do essentially not contain any components that are not mentioned in this description.

In embodiments, the glass used for the drinking implement has the following composition in percent by weight:

| **Component** | **Content (wt.%)** |
|---|---|
| SiO₂ | 40 to 85 |
| Al₂O₃ | 0 to 25 |
| Na₂O | 2 to 18 |
| K₂O | 0 to 15 |
| MqO | 0 to 10 |
| B₂O₃ | 0 to 15 |
| Li₂O | 0 to 10 |
| ZnO | 0 to 5 |
| CaO | 0 to 10 |
| BaO | 0 to 5 |
| ZrO₂ | 0 to 5 |
| CeO₂ | 0 to 0.5 |
| SnO₂ | 0 to 3 |
| P₂O₅ | 0 to 15 |
| Fe₂O₃ | 0 to 1.5 |
| TiO₂ | 0 to 10 |
| SrO | 0 to 1 |
| F | 0 to 1 |
| Cl | 0 to 1 |

In embodiments, the glass used for the drinking implement has the following composition in percent by weight:

| **Component** | **Content (wt.%)** |
|---|---|
| SiO₂ | 55 to 65 |
| Al₂O₃ | 10 to 20 |
| Na₂O | 0 to 3 |
| K₂O | 0 to 3 |
| MgO | 0 to 5 |
| B₂O₃ | 0 to 6 |
| Li₂O | 0 to 3 |
| ZnO | 0 to 3 |
| CaO | 7 to 15 |
| BaO | 5 to 10 |
| ZrO₂ | 0 to 3 |
| CeO₂ | 0 to 0.5 |
| SnO₂ | 0 to 3 |
| P₂O₅ | 0 to 3 |
| Fe₂O₃ | 0 to 1.5 |
| TiO₂ | 0 to 3 |
| SrO | 0 to 1 |
| F | 0 to 1 |
| Cl | 0 to 1 |

In embodiments, the glass used for the drinking implement has the following composition in percent by weight:

| **Component** | **Content (wt.%)** |
|---|---|
| SiO₂ | 65 to 85 |
| Al₂O₃ | 0 to 7 |
| Na₂O | 0.5 to 10 |
| K₂O | 0 to 10 |
| MqO | 0 to 3 |
| B₂O₃ | 8 to 20 |
| Li₂O | 0 to 3 |
| ZnO | 0 to 3 |
| CaO | 0 to 3 |
| BaO | 0 to 3 |
| ZrO₂ | 0 to 3 |
| CeO₂ | 0 to 0.5 |
| SnO₂ | 0 to 3 |
| P₂O₅ | 0 to 3 |
| Fe₂O₃ | 0 to 1.5 |
| TiO₂ | 0 to 3 |
| SrO | 0 to 1 |
| F | 0 to 1 |
| Cl | 0 to 1 |

In embodiments, the glass used for the drinking implement has the following composition in percent by weight:

| **Component** | **Content (wt.%)** |
|---|---|
| SiO₂ | 60 to 80 |
| Al₂O₃ | 0 to 5 |
| Na₂O | 10 to 18 |
| K₂O | 0 to 5 |
| MqO | 0 to 5 |
| B₂O₃ | 0 to 5 |
| Li₂O | 0 to 3 |
| ZnO | 0 to 3 |
| CaO | 2 to 10 |
| BaO | 0 to 5 |
| ZrO₂ | 0 to 3 |
| CeO₂ | 0 to 0.5 |
| SnO₂ | 0 to 3 |
| P₂O₅ | 0 to 3 |
| Fe₂O₃ | 0 to 1.5 |
| TiO₂ | 0 to 3 |
| SrO | 0 to 1 |
| F | 0 to 1 |
| Cl | 0 to 1 |

### Optional additional treating of the drinking implement

For optional chemical toughening, the glass may be immersed in a salt bath. The salt bath may contain sodium and/or potassium salts. The salt for the salt bath may comprise Na, K or Cs nitrate, sulfate or chloride salts or a mixture of one or more thereof. Preferred salts are NaNO₃, KNO₃, NaCl, KCI, K₂SO₄, Na₂SO₄, Na₂CO₃, K₂CO₃, or combinations thereof. Additives like NaOH, KOH and other sodium or potassium salts may also be used for better controlling the speed of ion-exchange, compressive stress and DoL during chemical toughening. In an embodiment, the salt bath comprises KNO₃, NaNO₃, CsNO₃ or mixtures thereof.

The temperature during chemical toughening may range from 320°C to 700°C, from 350°C to 500°C, or from 380°C to 450°C. If the toughening temperature is very low, the toughening rate will be low. Therefore, chemical toughening is preferably done at a temperature of more than 320°C, more preferably more than 350°C, more preferably more than 380°C, more preferably at a temperature of at least 400°C. However, the toughening temperature should not be very high because very high temperatures may result in strong compressive stress relaxation and low compressive stress. Preferably, chemical toughening is done at a temperature of less than 500°C, more preferably less than 450°C.

The time for chemical toughening may range from 5 min to 48 h, from 10 min to 20 h, from 30 min to 16 h, or from 60 min to 10 h. In preferred embodiments, the duration of chemical toughening is of from 0.5 to 16 h. Chemical toughening may either done in a single step or in multiple steps, in particular in two steps. If the duration of toughening is very low, the resulting DoL may be very low. If the duration of toughening is very high, the CS may be relaxed very strongly. The duration of each toughening step in a multistep toughening procedure is preferably between 0.05 and 15 hours, more preferably between 0.2 and 10 hours, more preferably between 0.5 and 6 hours, more preferably between 1 and 4 hours. The total duration of chemical toughening, in particular the sum of the durations of the two or more separate toughening steps, is preferably between 0.01 and 20 hours, more preferably between 0.2 and 20 hours, more preferably between 0.5 and 15 hours, more preferably between 1 and 10 hours, more preferably between 1.5 and 8.5 hours. Drinking implement may be chemically toughened such that it has a DoL of at least 10 µm, or at least 20 µm. In some embodiments, the DoL may be up to 80 µm, up to 60 µm or up to 50 µm.

In some embodiments, the glass is chemically toughened with a mixture of KNO₃ and NaNO₃. In embodiments, the mixture comprises less than 50 mol% NaNO₃, less than 30 mol% NaNO₃, less than 20 mol% NaNO₃, less than 10 mol% NaNO₃, or less than 5 mol% NaNO₃. In some embodiments, the glass is chemically toughened with a mixture of KNO₃ and CsNO₃. In embodiments, the mixture comprises less than 50 mol% CsNO₃, less than 30 mol% CsNO₃, less than 20 mol% CsNO₃, less than 10 mol% CsNO₃, or less than 5 mol% CsNO₃. The balance may be KNO₃.

Chemical toughening with both KNO₃ and NaNO₃ may be done by using a mixture of KNO₃ and NaNO₃ or by performing separate toughening steps with essentially pure NaNO₃ and essentially pure KNO₃. Also in embodiments in which the glass is chemically toughened with mixtures of KNO₃ and NaNO₃, preferably two distinct consecutive toughening steps are performed. Preferably, the proportion of KNO₃ in the mixture used for the second toughening step is higher than the proportion of KNO₃ in the mixture used for the first toughening step. The chemical toughening can include multi steps in salt baths with alkaline metal ions of various concentrations to reach better toughening performance.

The toughening can be done by immersing the glass into a molten salt bath of the salts described above, or by covering the glass with a paste containing the ions described above, e.g. potassium ions and/or other alkaline metal ions, and heating to a high temperature for a certain time. The alkaline metal ions with larger ion radius in the salt bath or the paste exchange with alkaline metal ions with smaller radius in the glass article, and surface compressive stress is formed due to ion exchange.

A chemically toughened drinking implement of the invention may be obtained by chemically toughening at least the wall of the drinking implement of the present invention. The toughening process can be done by partially or completely immersing the drinking implement, the glass tube, the glass wall, or any intermediate glass article into an above-described salt bath, or subjecting it to a salt paste. The monovalent ions in the salt bath have radii larger than alkali ions inside the glass. A compressive stress to the glass is built up after ion-exchange due to larger ions squeezing in the glass network. After the ion-exchange, the strength and flexibility of the glass is surprisingly and significantly improved. In addition, the compressive stress induced by chemical toughening may increase scratch resistance of the drinking implement. Improved scratch resistance is particularly relevant for drinking implements because scratches affect both mechanical and chemical resistance of a glass surface as well as optical appearance.

After chemical toughening, the glass tubes are taken out of the salt bath, then cleaned with water and dried. Compressive stress layers are formed on the outer surface and/or inner surface of strengthened glass tubes. Correspondingly, a tensile stress is formed in the core part of the glass tubing wall.

Additionally, or as an alternative to chemical toughening the glass can be subjected to physical toughening. In some embodiments glass tubes are physically toughened. The glass tubes may be cut into short length, such as 100 to 400 mm. Then the two end sides of short glass tubes may be fire polished. When its wall thickness is bigger than 3 mm, short glass tubes may be physically toughened. Glass tubes may be placed into a furnace and heated above transformation temperature and kept for several minutes and then their surfaces are fast cooled with sprayed cooling air, causing compressive stress layers on both outer and inner surfaces.

### Examples

Example drinking implements according to this invention were prepared. The type of a drinking implement can be or is determined especially by the following properties and aspects:

### Toughening

One or more types of toughening might be applied to the drinking implement during the manufacturing process. For example a drinking implement might be chemically toughened and/or physically toughened. Both types of toughening are explained in detail elsewhere in this application.

The threshold diffusivity D of the wall of the drinking implement preferably is at least 1.5 µm²/hour, more preferably at least 4 µm²/hour. The chemical toughening performance of glass can be described by the threshold diffusivity D. The threshold diffusivity D can be calculated from the measured depth of layer (DoL) and the ion exchange time (IET) according to the relationship: DoL = ~1.4 sqrt (4*D*IET). The threshold diffusivity may for example be measured when chemically toughening the glass at 410°C in KNO₃ for 8 hours. The glass used for the drinking implement may have excellent chemical toughening performance which allows for a very economic production. Thus, the glass may have a threshold diffusivity D of at least 1.5 µm²/hour. Preferably, the glass of the present invention has a threshold diffusivity D of at least 4 µm²/hour, at least 6 µm²/hour, at least 8 µm²/hour, at least 10 µm²/hour, at least 12 µm²/hour, at least 14 µm²/ hour, at least 16 µm²/hour, at least 18 µm²/hour, at least 20 µm²/hour, at least 25 µm²/hour, at least 30 µm²/hour, at least 35 µm²/hour, or even at least 40 µm²/hour. In an embodiment, the threshold diffusivity is up to 60 µm²/hour or up to 50 µm²/hour.

In some embodiments chemical toughening is employed.

### Cutting mechanism

In preferred embodiments at least one out of three cutting mechanisms might be applied for manufacturing the drinking implements, i.e. to prepare the desired length of each drinking implement from a longer glass element: 1. scratching, which means that at desired positions the longer glass element is scratched and broken in order to obtain the individual drinking implements. This technique might be also referred to as "score broken". 2. Sawing, which means that at the desired positions the longer glass element is sawed so that individual drinking implements are obtained. 3. Laser cutting, which means that the individual drinking implements are obtained in that a laser cuts the individual pieces from the longer glass element.

In preferred embodiments a laser cutting technique is employed.

### Polishing

In preferred embodiments all or at least one or more parts of the drinking implements can be made subject to fire polishing. This means that the material is exposed to a flame or heat, for example during drawing of the glass tube or afterwards. This might result in a smoothening of the surface. Preferably at least the end sections of the drinking implements are fire polished. More preferably the entire drinking implement is fire polished, at least its outer surface. Reference is also made to the discussion made with respect to surface roughness above.

### Design level

The robustness and the mouth feel of a drinking implement is largely dependent on the design of the one or more specific end sections, as outlined in detail herein. Dependent on the required specifications, different design levels might be employed. According to the convention of the inventors, the lower the design level is, the higher is the robustness and/or the better is mouth feel of the drinking implement.

As one indicator of the robustness, the extent to which at least one part of the specific end section is tilted towards the center axis of the drinking implement might be employed. For example, the ratio of the first and second or the third and fourth distances can be considered as one variable indicating the design level among others. In this respect, preferably the more at least one part of the specific end section is tilted towards the center axis of the drinking implement, the higher the robustness and/or the better the mouth feel is.

The design of the specific end sections might be obtained by means of a slot burner strip. To be more precise, the respective designs of the specific end sections of the drinking implements might be obtained as follows:
The drinking implements are transported in a rolling manner along a slot burner strip. For example, the slot burner strip might have an extension of 400 mm and affect the drinking implements in a region of the respective end section of up to 10 mm, of up to 5 mm or of up to 2 mm. The flame might preferably affect the entire end section, a part of the end section, a part of the end section and other parts of the drinking implement outside of the end section or the entire end section and other parts of the drinking implement outside of the end section.

The transport speed preferably is between 1-100 mm/s, more preferably between 10-70 mm/s, even more preferably between 20-50 mm/s and most preferably 30 mm/s.

The respective end section of the drinking implement can be exposed to the flame, especially gas or oxygen flame, of the slot burner strip in that the drinking implement is aligned by means of a stop element at the other end section. Preferably the end section which is affected by the flame is centered with respect to the flame.

Preferably, the angle between the main direction of the flame and the center axis of the drinking implement is 90 degrees.

The rotation speed (rolling) of the drinking implement may be particular dependent on the transport speed. Preferably the rotation speed is between 0.1 and 10 rotations per minute. For example for a transport speed of 30 mm/s a preferred rotation speed might be between 1.0 and 1.1 rotations per minute, especially for a drinking implement which has an outer diameter of 9 mm.

Preferably the average temperature of the end section when leaving the flame is above 500 degrees C, above 700 degrees C, above 900 degrees C or above 1000 degrees C.

Preferably the temperature of the flame contacting the drinking implement is above 500 degrees C, above 700 degrees C, above 900 degrees C or above 1000 degrees C.

For example, the slot burner strip has an extension of 400 mm (preferably providing a flame having a width perpendicular to the extension of the slot burner strip of between 0.5 mm and 10) mm and the transport speed of the drinking implements is 20 mm/s. In this case the end section of the drinking implement are exposed to the flame for 20 seconds.

In other words, controlling the transport speed and/or the temperature of the flame can be used for obtaining different design levels.

For example there might be 7 different design levels (L=1..7) which are preferred and which can be obtained as described above by varying the transport speed, for example between 1 mm/s and 100 mm/s and more preferably between 10 mm/s and 50 mm/s, at a constant temperature of the flame. However, there might be one design level which is particularly preferred and which can be obtained by means of a transport speed of 30 mm/s. Indeed, the preferred transport speed, hence the preferred design level, might be dependent on the cutting technique used for cutting the drinking implement.

In preferred embodiment a design level of L=1 is employed which preferably is obtained by using a transport speed of 20 mm/s.

In preferred embodiment a design level of L=3 is employed which preferably is obtained by using a transport speed of 30 mm/s.

In preferred embodiment a design level of L=7 is employed which preferably is obtained by using a transport speed of 40 mm/s.

### Annealing

Annealing of drinking implements allows to relieve residual internal stresses introduced during manufacture.

Typically, the annealing process is applied after cutting and polishing, especially fire polishing of the end sections, respectively, of the drinking implements. For example, the temperature for annealing of drinking implements can be between 500 and 550 degrees C, for example 535 degrees C, which is preferably about 20 to 30 degree C above Tg (which is the transition temperature of glass). Keeping the drinking implements at this temperature for several hours can release local stresses during both drawing and cutting processes, which allows to improve the uniformity of the whole tubing. Indeed, the drinking implements might run through an annealing oven in bulks for annealing.

In preferred embodiments annealing is employed.

The example drinking implements prepared are of different types. The following table shows the different types of drinking implements which were prepared. Each row represents a different type of drinking implement.

| **#** | **Toughened** | **Cutting mechanis m** | **Polished** | **Design level** | **Annealed** | **Score in the 50 mm barkeeper drop test** |
|---|---|---|---|---|---|---|
| **1a** | Non toughened | Scratched | Fire polished | L=1 | Annealed | 36 |
| **1b** | Non toughened | Scratched | Fire polished | L=3 | Annealed | 20 |
| **1c** | Non toughened | Scratched | Fire polished | L=7 | Annealed | 11 |
| **2a** | Non toughened | Sawed | Fire polished | L=1 | Annealed | 33 |
| **2b** | Non toughened | Sawed | Fire polished | L=3 | Annealed | 39 |
| **2c** | Non toughened | Sawed | Fire polished | L=7 | Annealed | 17 |
| **3a** | Non toughened | Laser cut | Fire polished | L=1 | Annealed | 48 |
| **3b** | Non toughened | Laser cut | Fire polished | L=3 | Annealed | 20 |
| **3c** | Non toughened | Laser cut | Fire polished | L=7 | Annealed | 12 |
| **4a** | Chemically Toughened | Scratched | Fire polished | L=1 | Annealed | 70 |
| **4b** | Chemically Toughened | Scratched | Fire polished | L=3 | Annealed | 33 |
| **4c** | Chemically Toughened | Scratched | Fire polished | L=7 | Annealed | 17 |
| **5a** | Chemically Toughened | Sawed | Fire polished | L=1 | Annealed | 38 |
| **5b** | Chemically Toughened | Sawed | Fire polished | L=3 | Annealed | 58 |
| **5c** | Chemically Toughened | Sawed | Fire polished | L=7 | Annealed | 18 |
| **6a** | Chemically Toughened | Laser cut | Fire polished | L=1 | Annealed | 104 |
| **6b** | Chemically Toughened | Laser cut | Fire polished | L=3 | Annealed | 26 |
| **6c** | Chemically Toughened | Laser cut | Fire polished | L=7 | Annealed | 18 |

The drinking implements listed in the table are all fire polished and annealed. However, they differ in the toughening (non toughened or chemically toughened), in the cutting mechanism (scratched [which means score broken], sawed and laser cut) and the design level (L=1, 3 and 7). Of course, it is acknowledged that preferably also other properties and aspects might be regarded in order to define or determine the type of a drinking implement.

Each type of the example drinking implements has been made subject to the 50 mm barkeeper drop test.

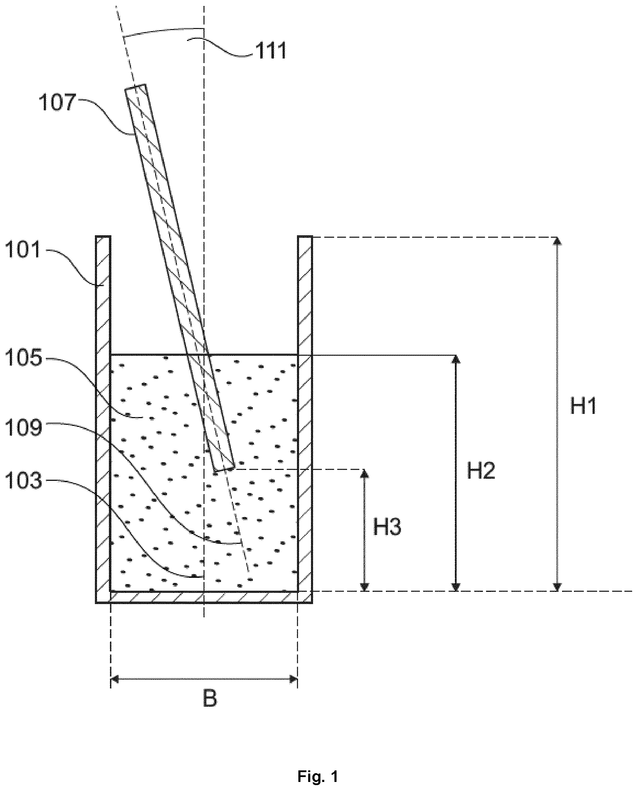

Fig. 1 shows a schematic drawing of a setup appropriate for conducting the 50 mm barkeeper drop test. A drinking glass 101 (which is made of glass and of cylindrical shape) has a center axis 103, an inner diameter B = 5 cm, an inner extension along the center axis 103 of H1 = 15 cm from its top to its inner bottom. The drinking glass 101 is filled with water 105 from the inner bottom along the center axis 103 up to a height of H2 = 10 cm.

A drinking implement 107 having a center axis 109 is oriented such that its center axis 109 and the center axis 103 of the drinking glass 101 enclose an angle 111 of 5 degrees.

The center axis 103 of the drinking glass 101 is parallel to the effect of the earth's gravitational force (not shown in Fig. 1).

Between the inner bottom of the drinking glass 101 and the end of the drinking implement 107 next to the drinking glass 101 (which is an end section designed as specific end section) there is a vertical distance of H3 = 5 cm.

The drinking glass 101 is arranged directly on a solid support (not shown in Fig. 1), preferably made of wood.

It is acknowledged that for the 50 mm barkeeper drop test all distances H1, H2 and H3 are vertical distances, preferably being measured along the center axis 103 of the drinking glass 101.

The 50 mm barkeeper drop test is named after the height H3 = 5 cm = 50 mm which corresponds to the dropping height of the drinking implement 107.

For conducting the 50 mm barkeeper drop test the drinking implement 107 is dropped from the dropping distance H3 (i.e. 50 mm) into the drinking glass 101. It is acknowledged that the angle 111 of 5 degrees is the angle 111 which is initially set. Once the drinking implement 107 has been released and while the drinking implement 107 falls towards the bottom of the drinking glass 101, the angle between the center axis 109 of the drinking implement 107 and the center axis 103 of the drinking glass 101 may change. The change of angle 111 may depend for example on where / when the drinking implement 107 touches the drinking glass 101, and may also depend on interactions between the water 105 and the drinking implement 107.

The 50 mm barkeeper drop test is repeated for one and the same drinking implement until a failure of the drinking implement occurs. The number of consecutive times which the drinking implement can be made subject to the 50 mm barkeeper drop test until failure of the drinking implement corresponds to the score the drinking implement has in the 50 mm barkeeper drop test.

Failure means that in at least one specific cross-sectional view the specific thickness is reduced, especially is reduced by at least 5 %, compared to the respective specific thickness prior to conducting the 50 mm barkeeper drop test. Reference is made to the more specific explanation with respect to the failure definition provided elsewhere in this application.

The higher the score the drinking implement has in the 50 mm barkeeper drop test is, the more robust the drinking implement is and, as surprisingly found, the more pleasant to the user's mouth the drinking implement is as well.

In the table above for each type of example drinking implement also its score in the 50 mm barkeeper drop test as determined experimentally by the inventors is provided.

These astonishing results greatly prove the robustness - hence the positive mouth feel - of the drinking implements according to the invention. All example drinking implements (see the table) have a 50 mm barkeeper drop test score of more than 10.

For example, the drinking implement with ID 6a even has a score of 104 in the 50 mm barkeeper drop test. This corresponds to the drinking implement which is toughened, fire polished, annealed, having a design level of L=1 and is cut using a laser cutting technique.

It is apparent from the results that chemical toughening improves the score the drinking implement has in the 50 mm barkeeper drop test regularly by 50 % or even more. It is also evident that for laser cutting and scratching a design level of L=1 is preferred while for sawing a design level of L=3 is preferred.

The choice of an appropriate design level, hence an appropriate choice of inner and outer transition angles greatly improves the mechanical properties of the drinking implement, especially when chosen in view of particular the applied cutting technique.

In preferred embodiments the drinking implements are chemically toughened.

In also preferred embodiments the drinking implement is cut using a scratching technique and has a design level of L=3.

In still preferred embodiments the drinking implement is chemically toughened, fire polished, annealed, cut using a scratching technique and has a design level of L=3.

In still preferred embodiments the drinking implement is chemically toughened, fire polished, annealed, cut using a scratching technique and has a design level of L=1.

In also preferred embodiments the drinking implement is chemically toughened, fire polished, annealed, cut using a saw technique and has a design level of L=3.

In further preferred embodiments the drinking implement is chemically toughened, fire polished, annealed, cut using a laser cutting technique and has a design level of L=1.

In preferred embodiments the chemical toughening conditions are pure KNO3 at 410 °C for 8 hours.

It is preferred that the design level L indicates at least implicitly the transport speed. For example all possible transport speeds for a manufacturing machine are mapped on the range of L=1...7 with L=1 indicating the minimal transport speed (and maximal tilting of the specific end section) and L=7 indicating the maximal transport speed (and minimal tilting of the specific end section).

It is acknowledged that in preferred embodiments also other mapping rules might be applied. For example L=1 may indicate a minimal tilting/maximal speed and L=7 may indicate a maximal tilting/minimal speed. Alternatively or in addition also the mapping range might be shifted, increased and/or decreased, say L=0..1, L=1..10 or L=1..100.

### Brief description of the figures

Various aspects of this invention will become apparent to those skilled in the art from the following detailed description of preferred embodiments, when read in light of the accompanying schematic drawings, wherein
- Fig. 1: shows a schematic drawing of a setup of the 50 mm barkeeper drop test;
- Fig. 2a: shows a perspective, partially cut view of a drinking implement according to the invention;
- Fig. 2b: shows a part of the drinking implement shown in Fig. 2a in a magnified manner;
- Fig. 3a: shows a specific cross-sectional view of a part of a drinking implement according to the invention having a first design level;
- Fig. 3b: shows a specific cross-sectional view of a part of a drinking implement according to the invention having a second design level;
- Fig. 3c: shows a specific cross-sectional view of a part of a drinking implement according to the invention having a third design level;
- Fig. 4a: shows a part of a drinking implement according to the invention having a first design level;
- Fig. 4b: shows a part of a drinking implement according to the invention having a second design level;
- Fig. 4c: shows a part of a drinking implement according to the invention having a third design level; and
- Fig. 5: shows broken end sections of drinking implements.

### Detailed description of the figures

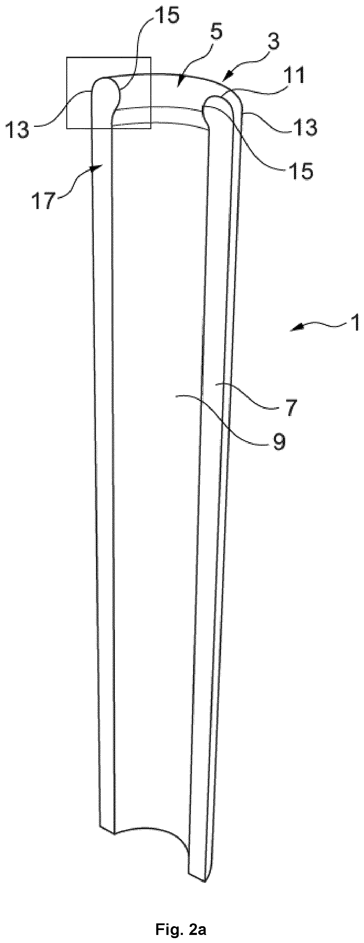

Fig. 2a shows a drinking implement 1 in a perspective, partial cut view. The view reveals one end section 3 of the drinking implement 1 which is designed as a specific end section. The other end section of the drinking implement 1 is not shown in Fig. 2a. The end section 3 has a first opening 5 and the end section 3 is comprised by a wall 7. The wall 7 surrounds a lumen 9.

As can be taken from Fig. 2a, the vertex 11 of the ridge of the drinking implement describes a circle for the complete drinking implement (a half circle in Fig. 2a). Furthermore, the end section 3 also comprises an outer edge 13 which also describes a circle for the complete drinking implement (a half circle in Fig. 2a). To be more precise, the outer edge 13 follows an outer circumference of the end section 3. In other words, the outer edge 13 describes the most outer point of the end section 3 in a specific cross-sectional view 17 of the drinking implement 1 which comprises the center axis of the drinking implement 1.

The end section 3 also comprises an inner edge 15 which also describes a circle for the complete drinking implement (a half circle in Fig. 2a). To be more precise, the inner edge 15 follows an inner circumference of the end section 3. In other words, the inner edge 15 describes the most inner point of the end section 3 in the specific cross-sectional view 17 of the drinking implement 1 which view comprises the center axis of the drinking implement 1.

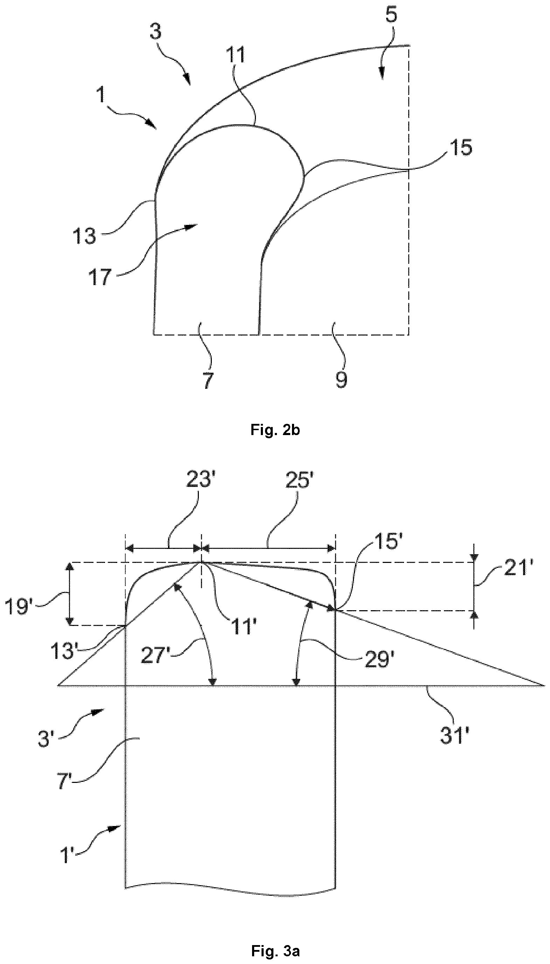

Fig. 2b shows the part of the drinking implement 1 highlighted by a rectangle in Fig. 2a in a closer view (the displayed perspective is slightly changed). The reference signs are the same as used with respect to Fig. 2a.

Fig. 3a shows a specific cross-sectional view of a part of a drinking implement 1' according to the invention. Identical structural features are denoted in Fig. 3a by the same reference numerals as used with respect to Figs. 2a and 2b but with a single dash.

The drinking implement 1' has a first design level (L=7). A design level refers particularly to the design of the specific end section, which here is end section 3'.

In the cross-sectional view of Fig. 3a a first distance 19' can be defined as the vertical distance measured along the center axis of the drinking implement 1' between the vertex 11' of the ridge and the outer edge 13'. Furthermore, in the cross-sectional view of Fig. 3a also a second distance 21' can be defined as the vertical distance measured along the center axis of the drinking implement 1' between the vertex 11' of the ridge and the inner edge 15'.

In the cross-sectional view of Fig. 3a a third distance 23' can be defined as the horizontal distance measured perpendicular to the center axis of the drinking implement 1' between the vertex 11' of the ridge and the outer edge 13'. Furthermore, in the cross-sectional view of Fig. 3a also a fourth distance 25' can be defined as the horizontal distance measured perpendicular to the center axis of the drinking implement 1' between the vertex 11' of the ridge and the inner edge 15'.

In the cross-sectional view of Fig. 3a a specific thickness of the wall can be defined which is the vertical distance between the outer edge 13' and inner edge 15'. In Fig. 3a this corresponds to the sum of the third and fourth distances 23', 25'.

The outer edge 13' has an outer transition angle 27' which is the angle between on the one hand a straight line constituting the shortest connection between the respective outer edge 13' and the respective vertex 11' of the ridge and on the other hand a plane 31' oriented perpendicular to the center axis of the drinking implement 1'.

The inner edge 15' has an inner transition angle 29' which is the angle between on the one hand a straight line constituting the shortest connection between the respective inner edge 15' and the respective vertex 11' of the ridge and on the other hand the plane 31' oriented perpendicular to the center axis of the drinking implement 1'.

For the drinking implement 1' shown in Fig. 3a the following values are obtained:

| **First distance** | **Second distance** | **Third distance** | **Fourth distance** | **Specific thickness** | **Outer angle (absolute value)** | **Inner angle (absolute value)** |
|---|---|---|---|---|---|---|
| 0.49 mm | 0.37 mm | 0.50 mm | 0.97 mm | 1.47 mm | 41.037 degrees | 19.690 degrees |

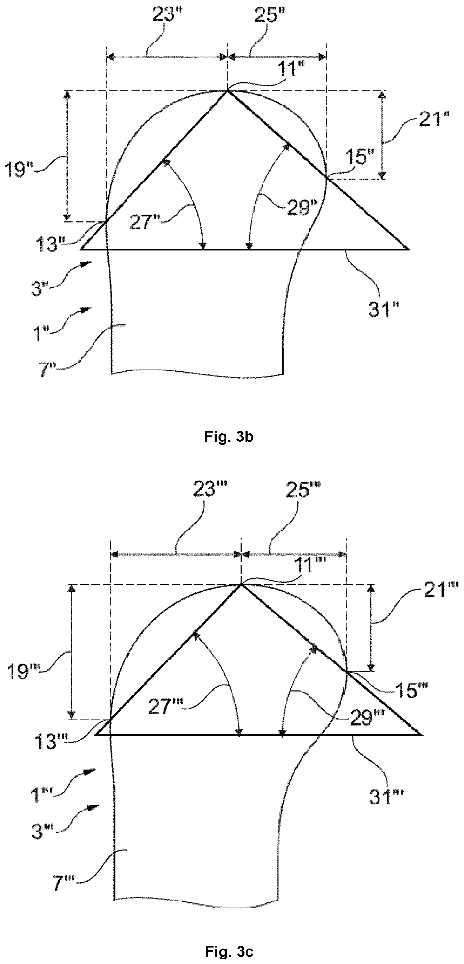

Fig. 3b shows a specific cross-sectional view of a part of a drinking implement 1" according to the invention. Identical structural features are denoted in Fig. 3b by the same reference numerals as used with respect to Figs. 2a, 2b and 3a but with a double dash. Therefore, reference can largely be made to the statements provided above with respect to Fig. 3a and only differences need to be discussed here.

The drinking implement 1" has a second design level (L=3). For the drinking implement 1" shown in Fig. 3b the following values are obtained:

| **First distance** | **Second distance** | **Third distance** | **Fourth distance** | **Specific thickness** | **Outer angle (absolute value)** | **Inner angle (absolute value)** |
|---|---|---|---|---|---|---|
| 1.19 mm | 0.81 mm | 1.05 mm | 0.97 mm | 2.02 mm | 47.118 degrees | 42.144 degrees |

Fig. 3c shows a specific cross-sectional view of a part of a drinking implement 1‴ according to the invention. Identical structural features are denoted in Fig. 3c by the same reference numerals as used with respect to Figs. 2a, 2b, 3a and 3b but with a triple dash. Therefore, reference can largely be made to the statements provided above with respect to Fig. 3a and only differences need to be discussed here.

The drinking implement 1‴ has a third design level (L=1). For the drinking implement 1‴ shown in Fig. 3c the following values are obtained:

| **First distance** | **Second distance** | **Third distance** | **Fourth distance** | **Specific thickness** | **Outer angle (absolute value)** | **Inner angle (absolute value)** |
|---|---|---|---|---|---|---|
| 1.30 mm | 0.84 mm | 1.22 mm | 1,38 mm | 2.60 mm | 46.018 degrees | 39.885 degrees |

It is apparent that the ratio of the first and second distances is an indicator how much tilted the top portion of the end section of the drinking implement is. Said ratio is for first design level 1.32, for the second design level 1.47 and for the third design level 1.57. The larger that ratio is, the more tilted the end section appears in the Figures.

It is also apparent that the ratio of the fourth and third distances is an indicator, too, how much tilted the top portion of the end section of the drinking implement is. Said ratio is for first design level 1.70, for the second design level 0,92 and for the third design level 0.88. The smaller that ratio is, the more tilted the end section appears in the Figures.

By controlling the inner and outer angles, a control of the first through fourth distances is possible. Hence, a control of the robustness is possible.

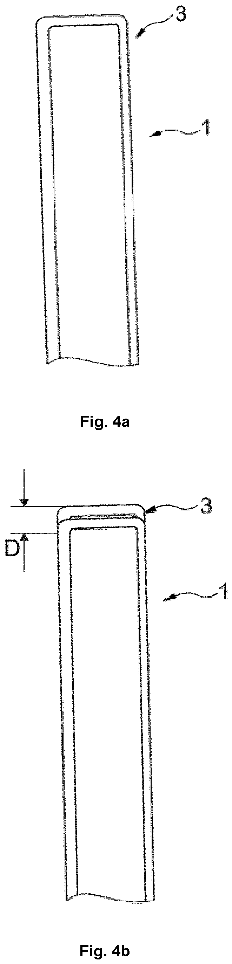

Fig. 4a shows a part of a drinking implement 1 according to the invention having a first design level, for example similar to the first design level described with respect to Fig. 3a above. It is obvious that the end section 3 is not much different from the other wall section, i.e. the end section is not tilted much.

Fig. 4b shows a part of a drinking implement 1 according to the invention having a second design level, for example similar to the second design level described with respect to Fig. 3b above. It is obvious that the end section 3 appears to be different from the other wall section, i.e. the end section is tilted. As indicated as distance D in Fig. 4b, the length of the end section shown in Fig. 4b is approx. 1.8 mm.

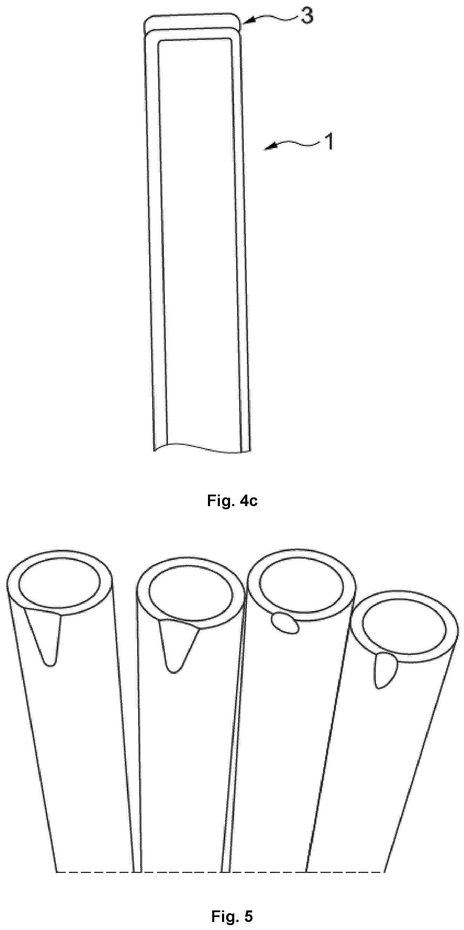

Fig. 4c shows a part of a drinking implement 1 according to the invention having a second third level, for example similar to the third design level described with respect to Fig. 3c above. It is obvious that the end section 3 appears to be even more different from the other wall section, i.e. the end section is even more tilted.

The more tilted the end section, especially the specific end section, is, the more robust the drinking implement is. For example, the more tilted the end section, especially the specific end section, is, the lower the speed of transport during applying the design level has been. Therefore, for low transport speeds a design level of say L=1 might be obtained which corresponds to a more tilted end section than for faster transport speeds (as for example used to obtain a design level of L=3 or even L=7).

Fig. 5 shows the end sections, especially the specific end sections, of four drinking implements. Apparently, the wall thickness at least in the end section is reduced for each drinking implement at least in some of the possible specific cross-sectional views which comprises the respective center axis of the drinking implement. For the drinking implements, a piece of the respective end section has chipped during the 50 mm barkeeper drop test.

The features of the independent claim 1 are essential for the realization of the invention in its different embodiments

### List of reference numerals

- 1, 1', 1", 1‴: Drinking implement
- 3, 3', 3", 3‴: End section
- 5: Opening
- 7, 7', 7", 7‴: Wall
- 9: Lumen
- 11, 11', 11", 11‴: Vertex
- 13, 13', 13", 13‴: Edge
- 15, 15', 15", 15‴: Edge
- 17: Cross-Section
- 19', 19", 19‴: Distance
- 21', 21", 21‴: Distance
- 23', 23", 23‴: Distance
- 25', 25", 25‴: Distance
- 27', 27", 27‴: Angle
- 29', 29", 29‴: Angle
- 31', 31", 31‴: Plane
- D: Distance
- 101: Drinking glass
- 103: Center axis
- 105: Water
- 107: Drinking implement
- 109: Center axis
- 111: Angle
- B: Diameter
- H1, H2, H3: Distance

## Claims

1. A drinking implement (1, 1', 1", 1‴) being a straw having
at least one first end section comprising at least one first opening,
at least one second end section comprising at least one second opening, and
at least one wall (7, 7', 7", 7‴) made of glass extending from the first opening to the second opening, wherein the wall (7, 7', 7", 7‴) comprises the first and second end sections and surrounds at least one lumen (9);
wherein at least one of the first and second end sections is designed as specific end section (3, 3', 3", 3‴) having at least partially
at least one ridge,
at least one outer edge (13, 13', 13", 13‴), wherein the outer edge (13, 13', 13", 13‴) has in each specific cross-sectional view of the specific end section (3, 3', 3", 3‴) at least one outer transition angle (27', 27", 27‴), wherein each of the specific cross-sectional views lies within a plane parallel to the center axis of the drinking implement (1, 1', 1", 1‴) and wherein each of the specific cross-sectional views comprises the center axis of the drinking implement (1, 1', 1", 1‴), and
at least one inner edge (15, 15', 15", 15‴), wherein the inner edge (15, 15', 15", 15‴) has in each specific cross-sectional view at least one inner transition angle (29', 29", 29‴),
wherein in each specific cross-sectional view at least one specific thickness of the wall (7, 7', 7", 7‴) is defined as the horizontal distance between the respective outer edge (13, 13', 13", 13‴) and the respective inner edge (15, 15', 15", 15‴), wherein the horizontal distance is measured along an axis perpendicular to the center axis of the drinking implement (1, 1', 1", 1‴);
wherein in each specific cross-sectional view the outer transition angle (27', 27", 27‴) is the angle between on the one hand a straight line constituting the shortest connection between the respective outer edge (13, 13', 13", 13‴) and the respective vertex (11, 11', 11", 11‴) of the ridge and on the other hand a plane (31', 31", 31‴) oriented perpendicular to the center axis of the drinking implement (1, 1', 1", 1‴);
wherein in each specific cross-sectional view the inner transition angle (29', 29", 29‴) is the angle between on the one hand a straight line constituting the shortest connection between the respective inner edge (15, 15', 15", 15‴) and the respective vertex (11, 11', 11", 11‴) of the ridge and on the other hand the plane (31', 31", 31‴) oriented perpendicular to the center axis of the drinking implement (1, 1', 1", 1‴);
wherein the outer transition angle (27', 27", 27‴) and the inner transition angle (29', 29", 29‴) both have absolute values of less than 90 degrees;
**characterized in that**
at the inner edge the lumen (9) has the smallest inner radius across the specific end section (3, 3', 3", 3‴).

2. The drinking implement (1, 1', 1", 1‴) according to claim 1,
wherein, preferably in at least one particular or each specific cross-sectional view, the absolute value of the outer transition angle (27', 27", 27‴) is not the same as the absolute value of the inner transition angle (29', 29", 29‴).

3. The drinking implement (1, 1', 1", 1‴) according to any one of the preceding claims,
wherein, preferably in the at least one particular or each specific cross-sectional view, the outer transition angle (27', 27", 27‴) has an absolute value of from >0 degrees to <90 degrees, from 20 degrees to 60 degrees, from 30 degrees to 50 degrees, at least 10 degrees, at least 20 degrees, at least 30 degrees, less than 90 degrees, less than or equal to 80 degrees, less than or equal to 70 degrees, less than or equal to 60 degrees or less than or equal to 50 degrees.

4. The drinking implement (1, 1', 1", 1‴) according to any one of the preceding claims,
wherein, preferably in the at least one particular or each specific cross-sectional view, the inner transition angle (29', 29", 29‴) has an absolute value of from >0 degrees to <90 degrees, from 20 degrees to 60 degrees, from 30 degrees to 50 degrees, at least 10 degrees, at least 20 degrees, at least 30 degrees, less than 90 degrees, less than or equal to 80 degrees, less than or equal to 70 degrees, less than or equal to 60 degrees or less than or equal to 50 degrees.

5. The drinking implement (1, 1', 1", 1‴) according to any one of the preceding claims, wherein, preferably in the at least one particular or each specific cross-sectional view, the outer transition angle (27', 27", 27‴) has a value of between 40 and 50 degrees and/or the inner transition angle (29', 29", 29‴) has a value of between 15 and 45 degrees.

6. The drinking implement (1, 1', 1", 1‴) according to any one of the preceding claims,
wherein, preferably in the at least one particular or each specific cross-sectional view, at the outer edge the drinking implement (1, 1', 1", 1‴) has the largest outer radius across the specific end section (3, 3', 3", 3‴).

7. The drinking implement (1, 1', 1", 1‴) according to any one of the preceding claims,
wherein in the at least one particular or each specific cross-sectional view at the inner edge the lumen (9) has the smallest inner radius across the specific end section (3, 3', 3", 3‴).

8. The drinking implement (1, 1', 1", 1‴) according to any one of the preceding claims,
wherein, preferably in the at least one particular or each specific cross-sectional view, a first distance (19', 19", 19‴) is defined by the vertical distance between the vertex (11, 11', 11", 11‴) of the ridge and the outer edge, which is larger than a second distance (21', 21", 21‴) defined by the vertical distance between the vertex (11, 11', 11", 11‴) of the ridge and the inner edge, wherein preferably the vertical distances are measured along a direction parallel to the center axis of the drinking implement (1, 1', 1", 1‴).

9. The drinking implement (1, 1', 1", 1‴) according to claim 8,
wherein, preferably in the at least one particular or each specific cross-sectional view, the ratio between the first distance (19', 19", 19‴) and the second distance (21', 21", 21‴) is between 1.10 and 2.10.

10. The drinking implement (1, 1', 1", 1‴) according to any one of the preceding claims,
wherein, preferably in the at least one particular or each specific cross-sectional view, a third distance (23', 23", 23‴) is defined by the horizontal distance between the vertex (11, 11', 11", 11‴) of the ridge and the outer edge, which is larger than a fourth distance (25', 25", 25‴) defined by the horizontal distance between the vertex (11, 11', 11", 11‴) of the ridge and the inner edge, wherein preferably the horizontal distances are measured along an axis, preferably within the respective cross-sectional view, which axis is perpendicular to the center axis of the drinking implement (1, 1', 1", 1‴).

11. The drinking implement (1, 1', 1", 1‴) according to claim 10
wherein, preferably in the at least one particular or each specific cross-sectional view, the ratio of the fourth distance (25', 25", 25‴) and the third distance (23', 23", 23‴) is less than 2.0, preferably less than 0.8.

12. The drinking implement (1, 1', 1", 1‴) according to any one of the preceding claims,
wherein, preferably in the at least one particular or each specific cross-sectional view, the ratio of on the one hand the specific thickness and on the other hand the minimal thickness of the wall (7, 7', 7", 7‴) of the drinking implement (1, 1', 1", 1‴) is larger than 1.10.

13. The drinking implement (1, 1', 1", 1‴) according to any one of the preceding claims,
wherein the drinking implement (1, 1', 1", 1‴) has a score of at least 10, preferably of at least 50, more preferably of at least 100, in the 50 mm barkeeper drop test,
wherein for the 50 mm barkeeper drop test the drinking implement (1, 1', 1", 1‴) is dropped into a container made of glass, arranged directly on at least one solid support, from a dropping distance of 50 mm, wherein the dropping distance is defined by the vertical distance measured along the center axis of the container between the inner bottom of the container and the end of the drinking implement (1, 1', 1", 1‴) next to the container, being the end of the specific end section (3, 3', 3", 3‴);
wherein the container is a drinking glass of at least in part cylindrical shape, which has an inner extension along the center axis of 15 cm from its top to its inner bottom and an inner diameter of 5 cm and which is further filled with water from the inner bottom along the center axis up to a height of 10 cm;
wherein when dropping the drinking implement (1, 1', 1", 1‴), it is oriented such that its center axis and the center axis of the container enclose an angle of 5 degrees;
wherein the center axis of the container is parallel to the effect of the earth's gravitational force; and
wherein the score the drinking implement (1, 1', 1", 1‴) has in the 50 mm barkeeper drop test corresponds to the number of consecutive times which the drinking implement (1, 1', 1", 1‴) can be made subject to the 50 mm barkeeper drop test until failure of the drinking implement (1, 1', 1", 1‴), wherein failure means that in at least one of the specific cross-sectional views the specific thickness is reduced, especially is reduced by at least 5 %, compared to the respective specific thickness prior to conducting the 50 mm barkeeper drop test.

14. The drinking implement (1, 1', 1", 1‴) according to any one of the preceding claims,
wherein the drinking implement (1, 1', 1", 1‴) is at least in part, preferably at least in part at the first and/or second end section, especially at least in part at the specific end section (3, 3', 3", 3‴), at least one of the following: chemically toughened, physically toughened, annealed and autoclaved; and/or wherein the drinking implement (1, 1', 1", 1‴) is manufactured at least in part by at least one of the following: using a laser cutting technique, using a scratching technique and using a sawing technique.

## Patentansprüche

1. Trinkhilfsmittel (1, 1', 1", 1‴), das ein Strohhalm ist, mit:
mindestens einem ersten Endabschnitt, der mindestens eine erste Öffnung aufweist;
mindestens einem zweiten Endabschnitt, der mindestens eine zweite Öffnung aufweist; und
mindestens einer Wand (7, 7', 7", 7‴) aus Glas, die sich von der ersten Öffnung zur zweiten Öffnung erstreckt, wobei die Wand (7, 7', 7", 7‴) den ersten und den zweiten Endabschnitt aufweist und mindestens ein Lumen (9) umschließt,
wobei mindestens einer unter dem ersten und dem zweiten Endabschnitt als ein spezifischer Endabschnitt (3, 3', 3", 3‴) ausgebildet ist, der zumindest teilweise aufweist:
einen Steg;
mindestens einen Außenrand (13, 13', 13", 13‴), wobei der Außenrand (13, 13', 13", 13‴) in jeder spezifischen Querschnittansicht des spezifischen Endabschnitts (3, 3', 3", 3‴) mindestens einen äußeren Übergangswinkel (27', 27", 27‴) aufweist, wobei jede der spezifischen Querschnittansichten innerhalb einer Ebene parallel zur Mittelachse des Trinkhilfsmittels (1, 1', 1", 1‴) liegt, und wobei jede der spezifischen Querschnittansichten die Mittelachse des Trinkhilfsmittels (1, 1', 1", 1‴) aufweist; und
mindestens einen Innenrand (15, 15', 15", 15‴), wobei der Innenrand (15, 15', 15", 15‴) in jeder spezifischen Querschnittansicht mindestens einen inneren Übergangswinkel (29', 29", 29‴) aufweist,
wobei in jeder spezifischen Querschnittansicht mindestens eine spezifische Dicke der Wand (7, 7', 7", 7‴) als der horizontale Abstand zwischen dem jeweiligen Außenrand (13, 13', 13", 13‴) und dem jeweiligen Innenrand (15, 15', 15", 15‴) definiert ist, wobei der horizontale Abstand entlang einer Achse senkrecht zur Mittelachse des Trinkhilfsmittels (1, 1', 1", 1‴) gemessen wird,
wobei in jeder spezifischen Querschnittansicht der äußere Übergangswinkel (27', 27", 27‴) der Winkel zwischen einerseits einer geraden Linie, die die kürzeste Verbindung zwischen dem jeweiligen Außenrand (13, 13', 13", 13‴) und dem jeweiligen Scheitelpunkt (11, 11', 11", 11‴) des Stegs bildet, und andererseits einer Ebene (31', 31", 31‴) ist, die senkrecht zur Mittelachse des Trinkhilfsmittels (1, 1', 1", 1‴) ausgerichtet ist,
wobei in jeder spezifischen Querschnittansicht der innere Übergangswinkel (29', 29", 29‴) der Winkel zwischen einerseits einer geraden Linie, die die kürzeste Verbindung zwischen dem jeweiligen Innenrand (15, 15', 15", 15‴) und dem jeweiligen Scheitelpunkt (11, 11', 11", 11‴) des Stegs bildet, und andererseits der Ebene (31', 31", 31‴) ist, die senkrecht zur Mittelachse des Trinkhilfsmittels (1, 1', 1", 1‴) ausgerichtet ist,
wobei der äußere Übergangswinkel (27', 27", 27‴) und der innere Übergangswinkel (29', 29", 29‴) beide absolute Werte von weniger als 90 Grad haben;
**dadurch gekennzeichnet, dass**
am inneren Rand das Lumen (9) den kleinsten inneren Radius über den spezifischen Endabschnitt (3, 3', 3", 3‴) aufweist.

2. Trinkhilfsmittel (1, 1', 1", 1‴) nach Anspruch 1, wobei vorzugsweise in mindestens einer spezifischen oder jeder spezifischen Querschnittansicht der Absolutwert des äußeren Übergangswinkels (27', 27", 27‴) dem Absolutwert des inneren Übergangswinkels (29', 29", 29‴) nicht gleicht.

3. Trinkhilfsmittel (1, 1', 1", 1‴) nach einem der vorhergehenden Ansprüche, wobei vorzugsweise in der mindestens einen spezifischen oder in jeder spezifischen Querschnittansicht der äußere Übergangswinkel (27', 27", 27‴) einen Absolutwert von > 0 Grad bis < 90 Grad, von 20 Grad bis 60 Grad, von 30 Grad bis 50 Grad, mindestens 10 Grad, mindestens 20 Grad, mindestens 30 Grad, kleiner als 90 Grad, kleiner oder gleich 80 Grad, kleiner oder gleich 70 Grad, kleiner oder gleich 60 Grad oder kleiner oder gleich 50 Grad hat.

4. Trinkhilfsmittel (1, 1', 1", 1‴) nach einem der vorhergehenden Ansprüche, wobei vorzugsweise in der mindestens einen spezifischen oder in jeder spezifischen Querschnittansicht der innere Übergangswinkel (29', 29", 29‴) einen Absolutwert von > 0 Grad bis < 90 Grad, von 20 Grad bis 60 Grad, von 30 Grad bis 50 Grad, mindestens 10 Grad, mindestens 20 Grad, mindestens 30 Grad, kleiner als 90 Grad, kleiner oder gleich 80 Grad, kleiner oder gleich 70 Grad, kleiner oder gleich 60 Grad oder kleiner oder gleich 50 Grad hat.

5. Trinkhilfsmittel (1, 1', 1", 1‴) nach einem der vorhergehenden Ansprüche, wobei vorzugsweise in der mindestens einen spezifischen oder in jeder spezifischen Querschnittansicht der äußere Übergangswinkel (27', 27", 27‴) einen Wert zwischen 40 und 50 Grad und/oder der innere Übergangswinkel (29', 29", 29‴) einen Wert zwischen 15 und 45 Grad aufweist.

6. Trinkhilfsmittel (1, 1', 1", 1‴) nach einem der vorhergehenden Ansprüche, wobei das Trinkhilfsmittel (1, 1', 1", 1‴) vorzugsweise in der mindestens einen spezifischen oder in jeder spezifischen Querschnittansicht am Außenrand den größten Außenradius über den spezifischen Endabschnitt (3, 3', 3", 3‴) aufweist.

7. Trinkhilfsmittel (1, 1', 1", 1‴) nach einem der vorhergehenden Ansprüche, wobei in der mindestens einen spezifischen oder in jeder spezifischen Querschnittansicht das Lumen (9) am inneren Rand den kleinsten inneren Radius über den spezifischen Endabschnitt (3, 3', 3", 3‴) aufweist.

8. Trinkhilfsmittel (1, 1', 1", 1‴) nach einem der vorhergehenden Ansprüche, wobei vorzugsweise in der mindestens einen spezifischen oder in jeder spezifischen Querschnittansicht ein erster Abstand (19', 19", 19‴) durch den vertikalen Abstand zwischen dem Scheitelpunkt (11, 11', 11", 11‴) des Stegs und dem Außenrand definiert ist, der größer ist als ein zweiter Abstand (21', 21", 21‴), der durch den vertikalen Abstand zwischen dem Scheitelpunkt (11, 11', 11", 11‴) des Stegs und dem inneren Rand definiert ist, wobei vorzugsweise die vertikalen Abstände entlang einer Richtung parallel zur Mittelachse des Trinkhilfsmittels (1, 1', 1", 1‴) gemessen werden.

9. Trinkhilfsmittel (1, 1', 1", 1‴) nach Anspruch 8, wobei vorzugsweise in der mindestens einen spezifischen oder in jeder spezifischen Querschnittansicht das Verhältnis zwischen dem ersten Abstand (19', 19", 19‴) und dem zweiten Abstand (21', 21", 21‴) zwischen 1,10 und 2,10 liegt.

10. Trinkhilfsmittel (1, 1', 1", 1‴) nach einem der vorhergehenden Ansprüche,
wobei vorzugsweise in der mindestens einen spezifischen oder in jeder spezifischen Querschnittansicht ein dritter Abstand (23', 23", 23‴) durch den horizontalen Abstand zwischen dem Scheitelpunkt (11, 11', 11", 11‴) des Stegs und dem äußeren Rand definiert ist, der größer ist als ein vierter Abstand (25', 25", 25‴), der durch den horizontalen Abstand zwischen dem Scheitelpunkt (11, 11', 11", 11‴) des Stegs und dem inneren Rand definiert ist, wobei vorzugsweise die horizontalen Abstände entlang einer Achse, vorzugsweise innerhalb der jeweiligen Querschnittansicht, gemessen werden, wobei der Abstand sich senkrecht zur Mittelachse des Trinkhilfsmittels (1, 1', 1", 1‴) erstreckt.

11. Trinkhilfsmittel (1, 1', 1", 1‴) nach Anspruch 10,
wobei vorzugsweise in der mindestens einen spezifischen oder in jeder spezifischen Querschnittansicht das Verhältnis zwischen dem vierten Abstand (25', 25", 25‴) und dem dritten Abstand (23', 23", 23‴) kleiner ist als 2,0, vorzugsweise kleiner als 0,8.

12. Trinkhilfsmittel (1, 1', 1", 1‴) nach einem der vorhergehenden Ansprüche,
wobei vorzugsweise in der mindestens einen spezifischen oder in jeder spezifischen Querschnittansicht das Verhältnis zwischen einerseits der spezifischen Dicke und andererseits der minimalen Dicke der Wand (7, 7', 7", 7‴) des Trinkhilfsmittels (1, 1', 1", 1‴) größer als 1,10 ist.

13. Trinkhilfsmittel (1, 1', 1", 1‴) nach einem der vorhergehenden Ansprüche,
wobei das Trinkhilfsmittel (1, 1', 1", 1‴) einen Score-Wert von mindestens 10, vorzugsweise von mindestens 50, bevorzugter von mindestens 100, im 50-mm-Barkeeper-Falltest aufweist,
wobei für den 50-mm-Barkeeper-Falltest das Trinkhilfsmittel (1, 1', 1", 1‴) aus einer Falldistanz von 50 mm in einen unmittelbar auf mindestens einer festen Unterlage angeordneten Behälter aus Glas fallen gelassen wird, wobei die Falldistanz durch den entlang der Mittelachse des Behälters gemessenen vertikalen Abstand zwischen dem inneren Boden des Behälters und dem dem Behälter am nächsten liegenden Ende des Trinkhilfsmittels (1, 1', 1", 1‴), das das Ende des spezifischen Endabschnitts (3, 3', 3", 3‴) ist, definiert ist,
wobei der Behälter ein Trinkglas mit einer zumindest teilweise zylindrischen Form ist, das eine innere Erstreckung entlang der Mittelachse von 15 cm von seiner Oberseite zu seinem inneren Boden und einen Innendurchmesser von 5 cm aufweist und das ferner mit Wasser vom inneren Boden entlang der Mittelachse bis zu einer Höhe von 10 cm gefüllt ist,
wobei das Trinkhilfsmittel (1, 1', 1", 1‴) beim Fallenlassen so ausgerichtet ist, dass seine Mittelachse und die Mittelachse des Behälters einen Winkel von 5 Grad einschließen,
wobei die Mittelachse des Behälters sich parallel zur Wirkung der Erdanziehungskraft erstreckt, und
wobei der Score-Wert, den das Trinkhilfsmittel (1, 1', 1", 1‴) im 50-mm-Barkeeper-Falltest aufweist, der Anzahl der aufeinanderfolgenden Male entspricht, die das Trinkhilfsmittel (1, 1', 1", 1‴) dem 50-mm-Barkeeper-Falltest bis zum Versagen des Trinkhilfsmittels (1, 1', 1", 1‴) unterzogen werden kann, wobei Versagen bedeutet, dass in mindestens einer der spezifischen Querschnittansichten die spezifische Dicke im Vergleich zu der jeweiligen spezifischen Dicke vor Durchführung des 50-mm-Barkeeper-Falltests vermindert ist, insbesondere um mindestens 5% vermindert ist.

14. Trinkhilfsmittel (1, 1', 1", 1‴) nach einem der vorhergehenden Ansprüche,
wobei das Trinkhilfsmittel (1, 1', 1", 1‴) zumindest teilweise, vorzugsweise zumindest teilweise am ersten und/oder zweiten Endabschnitt, insbesondere zumindest teilweise am spezifischen Endabschnitt (3, 3', 3", 3‴), mindestens eine der folgenden Merkmale aufweist: chemisch vorgespannt, physikalisch vorgespannt, geglüht und autoklaviert, und/oder
wobei das Trinkhilfsmittel (1, 1', 1", 1‴) zumindest teilweise unter Verwendung zumindest eines der folgenden Verfahren hergestellt ist: eines Laserschneidverfahrens, eines Ritzverfahrens und eines Sägeverfahrens.

## Revendications

1. Instrument à boire (1, 1', 1", 1‴) consistant en une paille présentant
au moins une première section terminale comprenant au moins une première ouverture,
au moins une seconde section terminale comprenant au moins une seconde ouverture, et
au moins une paroi (7, 7', 7", 7‴) en verre s'étendant de la première ouverture à la seconde ouverture, dans lequel la paroi (7, 7', 7", 7‴) comprend les première et seconde sections terminales et entoure au moins une lumière (9) ;
dans lequel au moins l'une des première et seconde sections terminales est conçue sous forme de section terminale spécifique (3, 3', 3", 3‴) présentant au moins partiellement
au moins une arête,
au moins un bord externe (13, 13', 13", 13‴), dans lequel le bord externe (13, 13', 13", 13‴) présente dans chaque vue en coupe spécifique de la section terminale spécifique (3, 3', 3", 3‴) au moins un angle de transition externe (27', 27", 27‴), dans lequel chacune des vues en coupe spécifiques s'étend dans un plan parallèle à l'axe central de l'instrument à boire (1, 1', 1", 1‴) et dans lequel chacune des vues en coupe spécifiques comprend l'axe central de l'instrument à boire (1, 1', 1", 1‴), et
au moins un bord interne (15, 15', 15", 15‴), dans lequel le bord interne (15, 15', 15", 15‴) présente dans chaque vue en coupe spécifique au moins un angle de transition interne (29', 29", 29‴),
dans lequel, dans chaque vue en coupe spécifique, au moins une épaisseur spécifique de la paroi (7, 7', 7", 7‴) est définie comme la distance horizontale entre le bord externe respectif (13, 13', 13", 13‴) et le bord interne respectif (15, 15', 15", 15‴), dans lequel la distance horizontale est mesurée selon un axe perpendiculaire à l'axe central de l'instrument à boire (1, 1', 1", 1‴) ;
dans lequel dans chaque vue en coupe spécifique l'angle de transition externe (27', 27", 27"') est l'angle entre d'une part une droite formant la liaison la plus courte entre le bord externe respectif (13, 13', 13", 13‴) et le sommet respectif (11, 11', 11", 11‴) de l'arête et d'autre part un plan (31', 31", 31‴) orienté perpendiculairement à l'axe central de l'instrument à boire (1, 1', 1", 1‴) ; dans lequel dans chaque vue en coupe spécifique l'angle de transition interne (29', 29", 29‴) est l'angle entre d'une part une droite formant la liaison la plus courte entre le bord interne respectif (15, 15', 15", 15‴) et le sommet respectif (11, 11', 11", 11‴) de l'arête et d'autre part le plan (31', 31", 31‴) orienté perpendiculairement à l'axe central de l'instrument à boire (1, 1', 1", 1‴) ; dans lequel l'angle de transition externe (27', 27", 27‴) et l'angle de transition interne (29', 29", 29‴) présentent tous deux des valeurs absolues inférieures à 90 degrés ;
**caractérisé en ce qu'**au niveau du bord interne, la lumière (9) présente le rayon interne le plus faible à travers la section terminale spécifique (3, 3', 3", 3‴.

2. Instrument à boire (1, 1', 1", 1‴) selon la revendication 1,
dans lequel, de préférence dans au moins une vue en coupe spécifique particulière ou dans chacune d'entre elles, la valeur absolue de l'angle de transition externe (27', 27", 27‴) n'est pas la même que la valeur absolue de l'angle de transition interne (29', 29", 29‴).

3. Instrument à boire (1, 1', 1", 1‴) selon l'une quelconque des revendications précédentes, dans lequel, de préférence dans la au moins une vue en coupe spécifique particulière ou dans chacune d'entre elles, l'angle de transition externe (27', 27", 27‴) présente une valeur absolue comprise entre >0 degré et <90 degrés, entre 20 degrés et 60 degrés, entre 30 degrés et 50 degrés, d'au moins 10 degrés, d'au moins 20 degrés, d'au moins 30 degrés, inférieure à 90 degrés, inférieure ou égale à 80 degrés, inférieure ou égale à 70 degrés, inférieure ou égale à 60 degrés ou inférieure ou égale à 50 degrés.

4. Instrument à boire (1, 1', 1", 1‴) selon l'une quelconque des revendications précédentes, dans lequel, de préférence dans la au moins une vue en coupe spécifique particulière ou dans chacune d'entre elles, l'angle de transition interne (29', 29", 29‴) présente une valeur absolue comprise entre >0 degré et <90 degrés, entre 20 degrés et 60 degrés, entre 30 degrés et 50 degrés, d'au moins 10 degrés, d'au moins 20 degrés, d'au moins 30 degrés, inférieure à 90 degrés, inférieure ou égale à 80 degrés, inférieure ou égale à 70 degrés, inférieure ou égale à 60 degrés ou inférieure ou égale à 50 degrés.

5. Instrument à boire (1, 1', 1", 1‴) selon l'une quelconque des revendications précédentes, dans lequel, de préférence dans la au moins une vue en coupe spécifique particulière ou dans chacune d'entre elles, l'angle de transition externe (27', 27", 27‴) présente une valeur comprise entre 40 et 50 degrés et/ou l'angle de transition interne (29', 29", 29‴) présente une valeur comprise entre 15 et 45 degrés.

6. Instrument à boire (1, 1', 1", 1‴) selon l'une quelconque des revendications précédentes, dans lequel, de préférence dans la au moins une vue en coupe spécifique particulière ou dans chacune d'entre elles, au niveau du bord externe l'instrument à boire (1, 1', 1", 1‴) présente le plus grand rayon externe à travers la section terminale spécifique (3, 3', 3", 3‴).

7. Instrument à boire (1, 1', 1", 1‴) selon l'une quelconque des revendications précédentes, dans lequel, dans la au moins une vue en coupe spécifique particulière ou dans chacune d'entre elles, au niveau du bord interne la lumière (9) présente le plus petit rayon interne à travers la section terminale spécifique (3, 3', 3", 3‴).

8. Instrument à boire (1, 1', 1", 1‴) selon l'une quelconque des revendications précédentes, dans lequel, de préférence dans la au moins une vue en coupe spécifique particulière ou dans chacune d'entre elles, une première distance (19', 19", 19‴) est définie par la distance verticale entre le sommet (11, 11', 11", 11‴) de l'arête et le bord externe, qui est supérieure à une deuxième distance (21', 21", 21‴) définie par la distance verticale entre le sommet (11, 11', 11", 11‴) de l'arête et le bord interne, dans lequel de préférence les distances verticales sont mesurées selon une direction parallèle à l'axe central de l'instrument à boire (1, 1', 1", 1‴).

9. Instrument à boire (1, 1', 1", 1‴) selon la revendication 8, dans lequel, de préférence dans la au moins une vue en coupe spécifique particulière ou dans chacune d'entre elles, le rapport entre la première distance (19', 19", 19‴) et la deuxième distance (21', 21", 21‴) est compris entre 1,10 et 2,10.

10. Instrument à boire (1, 1', 1", 1‴) selon l'une quelconque des revendications précédentes, dans lequel, de préférence dans la au moins une vue en coupe spécifique particulière ou chacune d'entre elles, une troisième distance (23', 23", 23‴) est définie par la distance horizontale entre le sommet (11, 11', 11", 11‴) de l'arête et le bord externe, qui est supérieure à une quatrième distance (25', 25", 25‴) définie par la distance horizontale entre le sommet (11, 11', 11", 11‴) de l'arête et le bord interne, dans lequel de préférence les distances horizontales sont mesurées selon un axe, de préférence dans la vue en coupe respective, cet axe étant perpendiculaire à l'axe central de l'instrument à boire (1, 1', 1", 1‴).

11. Instrument à boire (1, 1', 1", 1‴) selon la revendication 10, dans lequel, de préférence dans la au moins une vue en coupe spécifique particulière ou dans chacune d'entre elles, le rapport entre la quatrième distance (25', 25", 25‴) et la troisième distance (23', 23", 23‴) est inférieur à 2,0, de préférence inférieur à 0,8.

12. Instrument à boire (1, 1', 1", 1‴) selon l'une quelconque des revendications précédentes, dans lequel, de préférence dans la au moins une vue en coupe spécifique particulière ou dans chacune d'entre elles, le rapport entre d'une part l'épaisseur spécifique et d'autre part de l'épaisseur minimale de la paroi (7, 7', 7", 7‴) de l'instrument à boire (1, 1', 1", 1‴) est supérieur à 1,10.

13. Instrument à boire (1, 1', 1", 1‴) selon l'une quelconque des revendications précédentes, dans lequel l'instrument à boire (1, 1', 1", 1‴) présente un score d'au moins 10, de préférence, d'au moins 50, plus préférablement d'au moins 100, au test de chute à 50 mm des barmans,
dans lequel pour le test de chute à 50 mm des barmans, l'instrument à boire (1, 1', 1", 1‴) est lâché dans un récipient en verre, disposé directement sur au moins un support solide, d'une distance de chute de 50 mm, dans lequel la distance de chute est définie par la distance verticale mesurée selon l'axe central du récipient entre le fond interne du récipient et l'extrémité de l'instrument à boire (1, 1', 1", 1‴) près du récipient, constituée par l'extrémité de la section terminale spécifique (3, 3', 3", 3‴) ;
dans lequel le récipient est un verre à boire de forme au moins partiellement cylindrique, qui présente une étendue interne selon l'axe central de 15 cm de son sommet à son fond interne et un diamètre interne de 5 cm et qui est en outre rempli d'eau depuis le fond interne selon l'axe central jusqu'à une hauteur de 10 cm ;
dans lequel lorsque l'instrument à boire (1, 1', 1", 1‴) est lâché, il est orienté de manière à ce que son axe central et l'axe central du récipient forment un angle de 5 degrés ;
dans lequel l'axe central du récipient est parallèle à l'effet de la force gravitationnelle de la Terre ; et
dans lequel le score de l'instrument à boire (1, 1', 1", 1‴) au test de chute à 50 mm des barmans correspond au nombre de fois consécutives que l'instrument à boire (1, 1', 1", 1‴) peut subir le test de chute à 50 mm des barmans jusqu'à la défaillance de l'instrument à boire (1, 1', 1", 1‴), dans lequel la défaillance signifie que dans au moins l'une des vues en coupe spécifiques l'épaisseur spécifique est réduite, en particulier est réduite d'au moins 5%, par rapport à l'épaisseur spécifique respective avant d'avoir effectué le test de chute à 50 mm des barmans.

14. Instrument à boire (1, 1', 1", 1‴) selon l'une quelconque des revendications précédentes, dans lequel l'instrument à boire (1, 1', 1", 1‴) est au moins en partie, de préférence au moins en partie au niveau de la première et/ou seconde section terminale, notamment au moins en partie au niveau de la section terminale spécifique (3, 3', 3", 3‴), au moins comme suit : trempé chimiquement, trempé physiquement, recuit et autoclavé ; et/ou dans lequel l'instrument à boire (1, 1', 1", 1‴) est fabriqué au moins en partie au moins comme suit : au moyen d'une technique de découpe laser, au moyen d'une technique de grattage, et au moyen d'une technique de sciage.
